(19) Europäisches Patentamt / European Patent Office / Office européen des brevets

(11) **EP 2 728 646 B1**

(12) **EUROPEAN PATENT SPECIFICATION**

(45) Date of publication and mention
of the grant of the patent:
**18.05.2016 Bulletin 2016/20**

(51) Int Cl.:
*H01M 2/16* *(2006.01)*     *H01M 2/14* *(2006.01)*
*C08F 220/18* *(2006.01)*     *H01M 10/42* *(2006.01)*
*H01M 10/0525* *(2010.01)*

(21) Application number: **12807867.2**

(22) Date of filing: **29.06.2012**

(86) International application number:
**PCT/JP2012/066751**

(87) International publication number:
**WO 2013/005683 (10.01.2013 Gazette 2013/02)**

(54) **MEMBRANE POREUSE POUR BATTERIES SECONDAIRES, PROCÉDÉ DE SA FABRICATION ET UTILISATION DE CELLE-CI**

**PORÖSE MEMBRAN FÜR SEKUNDÄRBATTERIEN, VERFAHREN ZU IHRER HERSTELLUNG UND IHRE VERWENDUNG**

**FILM POREUX POUR BATTERIE SECONDAIRE, ET PROCÉDÉ DE FABRICATION AINSI QU'APPLICATION ASSOCIÉS**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.07.2011 JP 2011147158**

(43) Date of publication of application:
**07.05.2014 Bulletin 2014/19**

(73) Proprietor: **Zeon Corporation**
**Chiyoda-ku**
**Tokyo 100-8246 (JP)**

(72) Inventor: **KANEDA, Takuya**
**Tokyo 100-8246 (JP)**

(74) Representative: **Vossius & Partner**
**Patentanwälte Rechtsanwälte mbB**
**Siebertstrasse 3**
**81675 München (DE)**

(56) References cited:
EP-A1- 1 920 920     WO-A1-2010/074202
WO-A1-2011/040562     WO-A1-2012/043729
WO-A1-2012/046843     JP-A- 2005 123 115
JP-A- 2008 546 135     JP-A- 2009 064 566
US-A- 5 011 751

EP 2 728 646 B1

**Description**

Field

The present invention relates to a porous membrane for a secondary battery, a method for producing the same, and an electrode, a separator, and a secondary battery using the same.

Background

Among practically applied batteries, a lithium ion secondary battery exhibits the highest energy density and has been often used, in particular, for small sized electronic products. Lithium ion secondary batteries are also expected to be applied to an automobile. For these applications, a lithium ion secondary battery having a higher capacity, a longer lifetime, and a higher safety has been required.

In a lithium ion secondary battery, an organic separator is generally used for preventing short circuit between a positive electrode and a negative electrode. The organic separator is usually made of a polyolefin-based material such as polyethylene or polypropylene, and has a property such that it is melted at 200°C or lower. Thus, when the battery temperature is elevated by internal and/or external stimulation, the organic separator may cause volume change due to contraction or melting. This phenomenon may cause, .e.g., short circuit between the positive electrode and the negative electrode, and release of electrical energy, which may possibly lead to explosion of the battery.

In order to solve such problems, it has been proposed to provide a porous membrane containing non-conductive particles such as inorganic fine particles on an organic separator and/or an electrode (positive electrode and/or negative electrode). Inorganic fine particles have excellent heat resistance, and therewith a porous membrane having a high strength can be formed (for example, Patent Literatures 1 and 2).

However, a formulation prepared from the inorganic fine particles inevitably contains moisture and metal ions, and therefore it is difficult to decrease the amount of these contents. When contamination of the porous membrane with the moisture and the metal ions occurs, the battery performance is adversely affected. Therefore, there is a limitation in the further improvement of the battery performance by the inorganic fine particles.

In order to solve such problems, use of organic fine particles in place of the inorganic fine particles has been proposed (Patent Literatures 3 and 4). By selecting the type of monomer to be used, the organic fine particles can have hydrophobic surface. Thus use of the organic fine particles can reduce the contamination amount of the moisture in a porous membrane as compared with the membrane with inorganic fine particles. Further, since the organic fine particles can be produced by a metal ion-free manufacturing process, the contamination amount of metal ions can also be reduced. Accordingly, it is expected that use of the organic fine particles can realize further improvement of the battery performance.

Patent literature 5 discloses a specific separator for a battery which contains flaky inorganic fine particles having an average thickness of 0.1 $\mu$m or less, globular organic fine particles stable to a nonaqueous electrolyte and having average particle size smaller than the flaky inorganic fine particles, and a binder resin, as well as a nonaqueous electrolyte battery using this separator.

Citation List

Patent Literature

Patent Literature 1: Japanese Patent Application Laid-Open No. 2007-294437 A
Patent Literature 2: Japanese Patent Application Laid-Open No. 2005-327680 A
Patent Literature 3: Japanese Patent Application Laid-Open No. 2006-139978 A
Patent Literature 4: Japanese Patent Application Laid-Open No. 2009-64566 A
Patent Literature 5: Japanese Patent Application Laid-Open No. 2009-064566 A

Summary

Technical Problem

However, a porous membrane containing organic fine particles has disadvantages such as low strength and low performance of preventing short circuit of the battery in a high temperature usage environment.

Further, the porous membrane containing organic fine particles also has a disadvantage in which it is difficult to obtain uniform distributions of membrane thickness and strength. When there is unevenness in the distributions of membrane thickness and strength, the membrane tends to cause partial crack and powder falling at cutting during production (powder falling is occurrence of minute pieces when a porous membrane having a large area is cut into pieces having a size suitable for use). These matters also cause a reduction in the battery performance.

Therefore, it is an object of the present invention to provide a porous membrane for a secondary battery wherein contamination amount with moisture and metal ions is kept at a low level, and the distributions of membrane thickness and strength are made uniform to thereby prevent undesired phenomena such as powder falling, whereby a secondary battery having a high safety and a long lifetime can be provided. It is also an object thereof to provide a method for producing the same, a component of a secondary battery including such a porous membrane, and a secondary battery.

Solution to Problem

In order to solve the aforementioned problems, the present inventors have paid attention to the fact that the performance of a porous membrane for a secondary battery varies with the shape of non-conductive particles in the porous membrane.

Patent Literatures 1 and 2 that have studied inorganic fine particles have already described about specific figuration of the shape of particles itself. It has hitherto been considered that a nonspherical shape such as a plate shape and a shape of linked particles are preferred.

However, as a result of studies conducted by the present inventors, it was surprisingly found out that, in the cases of using organic fine particles, a particularly favorable effect may be obtained by using particles having a shape similar to a spherical shape and having small irregularities on the surface. Such results are different from the results obtained with inorganic fine particles. The inventors have further studied about in what conditions such a favorable effect is obtained. As a result, the inventors have found out that the desired effect is obtainable when, in addition to the specific particle shape, specific materials are employed as the materials for the particles. The present invention has been completed on the basis of the aforementioned findings.

That is, according to the presen invention, the following are provided.

(1) A porous membrane for a secondary battery comprising non-conductive particles and a binder for a porous membrane, wherein
the non-conductive particles are spherical polymer particles having a rough surface, and
the particles include 50% by weight or more of a polyfunctional (meth)acrylic monomer unit,
characterized in that the particles satisfy the following expression (1):

$$1.2 \leq (SB) / (SD) \leq 5.0 \ (1)$$

(wherein SB represents an actual specific surface area of the particles and SD means a theoretical specific surface area of the particles),
an arithmetic average of shape factor of the particles is 1.20 or less, wherein the arithmetic average of shape factor is determined by observing the shape of particles, calculating each shape factor of the particles by the following expression (A), and calculating the arithmetic average thereof:

$$\text{shape factor} = (\text{maximum diameter/2})^2 \times \pi)/\text{projected area} \qquad \text{expression (A)},$$

wherein the maximum diameter means the particle width which is the maximum distance between two parallel lines sandwiching an image of the non-conductive particle projected onto a plane and the projected area means the area of the projection image of the non-conductive particle projected onto a plane surface.

(2) The porous membrane for a secondary battery according to (1), wherein:

the binder for a porous membrane is a (meth)acrylic polymer; and
a containing ratio of the binder for a porous membrane in the porous membrane for a secondary battery is 3 to 20% by weight.

(3) The porous membrane for a secondary battery according to (1) or (2), wherein the non-conductive particles have a number average particle diameter of 100 to 1,500 nm.

(4) A method for producing the porous membrane for a secondary battery according to (1), the method comprising:

polymerizing a polymerizable monomer composition to obtain non-conductive particles;
mixing the non-conductive particles, a binder for a porous membrane, and a medium to obtain a slurry for a porous membrane containing them;
applying the slurry for a porous membrane onto a substrate to obtain a slurry layer; and
drying the slurry layer, wherein
the non-conductive particles are spherical polymer particles having a rough surface,
the particles satisfy the following expression (1):

$$1.2 \leq (SB) / (SD) \leq 5.0 \quad (1)$$

(wherein SB represents an actual specific surface area of the particles and SD means a theoretical specific surface area of the particles),
an arithmetic average of shape factor of the particles is 1.20 or less, and
the particles include 50% by weight or more of a polyfunctional (meth)acrylic monomer unit.

(5) The production method according to (4), wherein:

the binder for a porous membrane is a (meth)acrylic polymer;
the medium is an aqueous medium; and
the step of obtaining the slurry for a porous membrane includes obtaining the slurry for a porous membrane as an aqueous dispersion.

(6) An electrode for a secondary battery, comprising:

a current collector;
an electrode material layer that includes an electrode active material and a binding agent for an electrode material layer, and adheres to the current collector; and
the porous membrane according to any one of (1) to (3), the porous membrane being layered on a surface of the electrode material layer.

(7) A separator for a secondary battery, comprising: an organic separator layer; and the porous membrane according to any one of (1) to (3), the porous membrane being layered on the organic separator layer.
(8) A secondary battery comprising: a positive electrode; a negative electrode; a separator; and an electrolyte solution, wherein at least one of the positive electrode, the negative electrode, and the separator has the porous membrane according to any one of (1) to (3).

Advantageous Effects of Invention

Even though the porous membrane for a secondary battery according to the present invention contains as non-conductive fine particles organic fine particles that have small contamination amount of moisture and metal ions, the porous membrane can be made with uniform distribution of membrane thickness and strength, to thereby avoid undesired phenomena such as powder falling. Furthermore, the porous membrane does not hinder the movement of ions. Therefore, a secondary battery having a high safety and a long lifetime can be provided. Therefore, the porous membrane for a secondary battery according to the present invention, and an electrode and a separator according to the present invention which have the porous membrane can provide a secondary battery having a high safety and a long lifetime. By the method for producing a porous membrane for a secondary battery according to the present invention, such a porous membrane for a secondary battery according to the present invention can be easily produced.

Description of Embodiments

The present invention will be described hereinbelow in detail by illustrating embodiments and exemplifications, but the present invention is not limited to these embodiments and exemplifications. The present invention may be arbitrarily modified without departing from the scope of the present invention and its equivalents.

[Summary]

The porous membrane for a secondary battery according to the present invention includes non-conductive particles and a binder for a porous membrane. In the porous membrane for a secondary battery according to the present invention, the non-conductive particles are polymer particles having a specific shape.

[Shape of Non-conductive Particles]

In the present invention, the non-conductive particles satisfy the following expression (1).

$$1.2 \leq (SB) / (SD) \leq 5.0 \quad (1)$$

In the expression (1), SB means an actual specific surface area of the particles and SD means a theoretical specific surface area of the particles. The unit of each of SB and SD is expressed as area per weight, and may usually be $m^2/g$.

The actual specific surface area SB is measured by a gas adsorption method. The gas absorption method measurement may be performed by, e.g., the full automatic BET specific surface area measurement device (product name "Macsorb HM model-1208" manufactured by MOUNTECH CO., Ltd.).

The theoretical specific surface area SD is a value calculated from measured values of the number average particle diameter and the specific gravity of the non-conductive particles, and is a value calculated as the specific surface area of a perfectly spherical particle having that particle diameter and that specific gravity.

The number average particle diameter represents a particle diameter at which a cumulative distribution value is 50% in a particle diameter-number cumulative distribution. The number average particle diameter of the non-conductive particles may be measured by a laser diffraction scattering particle size distribution measurement device (for example, product name "LS230", manufactured by Beckmann Coulter, Inc.).

The specific gravity of the non-conductive particles is measured by a densitometer such as a dry automatic densitometer (product name "Accupyc 1330-01", manufactured by Shimadzu Corporation).

When the number average particle diameter measured is 2r (m) and the specific gravity is G ($g/cm^3$), an area S' ($m^2$) and a volume V ($m^3$) of the perfectly spherical particle having a diameter r (m) are each represented by the following expressions.

$$S' = 4\pi r^2$$

$$V = (4\pi r^3)/3$$

In this case, the number N of particles per gram of the particles is represented by the following expression.

$$N = 1/VG$$

Therefore, the theoretical specific surface area SD ($m^2/g$) of the non-conductive particles is calculated by the following expression.

$$SD = S'N = S'/VG = 3/rG$$

The specific surface area ratio (SB)/(SD) is 1.2 to 5.0 as described above, preferably 1.3 to 4.0, and more preferably 1.4 to 3.0.

When the specific surface area ratio (SB)/(SD) exceeds the upper limit, the packing density decreases, and the contact area between the non-conductive particles decreases. Therefore, the strength of a porous membrane layer cannot be maintained. Therefore, when such particles are used in the battery, electrodes may come close to each other. As a result, troubles such as decrease in capacity during a cycle test and decrease in performance during a high-temperature short circuit test may be caused.

On the other hand, when the specific surface area ratio (SB)/(SD) is less than the lower limit, the frictional force between the non-conductive particles decreases. Thus, the strength of the porous membrane layer cannot be maintained, and the particles are densely packed. As a result, troubles such as a reduction in performance during the cycle test and a reduction in performance during the high-temperature short circuit test may be caused.

The actual specific surface area SB of the non-conductive particles is preferably 4.8 to 300 $m^2/g$, more preferably 6.5 to 120 $m^2/g$, and further preferably 8.4 to 60 $m^2/g$. The theoretical specific surface area SD of the non-conductive particles is preferably 4 to 60 $m^2/g$, more preferably 5 to 30 $m^2/g$, and further preferably 6 to 20 $m^2/g$.

The number average particle diameter of the non-conductive particles is preferably 100 to 1,500 nm, more preferably 200 to 1,200 nm, and further preferably 300 to 1,000 nm. When the number average particle diameter of the non-conductive particles falls within such a range, both improvement in the strength of the porous membrane and securement of pore space existence can be achieved. As a result, the ability to prevent short-circuit and other battery properties can be improved.

The arithmetic average of shape factor of the non-conductive particles is 1.20 or less, preferably 1.17 or less, and more preferably 1.14 or less. When the arithmetic average of shape factor exceeds the upper limit, the packing density of the non-conductive particles decreases, whereby insulation ability decreases. As a result, internal short circuit may occur.

The shape factor of a particle is an indication showing how the shape of the observed particle is different from a circular shape. The arithmetic average of shape factor is determined by observing the shape of particles, calculating each shape factor of the particles by the following expression (A), and calculating the arithmetic average thereof.

$$\text{Shape factor} = (\text{maximum diameter}/2)^2 \times \pi)/\text{projected area} \qquad \text{expression (A)}$$

In the expression, the maximum diameter means the particle width which is the maximum distance between two parallel lines sandwiching an image of the non-conductive particle projected onto a plane. The projected area means the area of the projection image of the non-conductive particle projected onto a plane surface.

The shape of the particles is observed by photographing an magnified image of the non-conductive particle by a scanning electron microscope (for example, field emission scanning electron microscope (Hitachi S-4700: manufactured by Hitachi High-Technologies Corporation)). The observation magnification may be appropriately adjusted in accordance with the particle diameter, and may be, e.g., 50,000 times. The noise of the obtained image is removed and the image is analyzed using an image analysis software (for example, analySIS Pro: manufactured by Olympus Corporation) to thereby calculate the arithmetic average of the shape factor.

A particle having a specific surface area ratio (SB)/(SD) and a shape factor that satisfy the aforementioned conditions is a spherical particle having a high spherical degree and has small irregularities on the surface. In the present invention, when the non-conductive particles have a specific shape, a porous membrane having a favorable performance can be obtained as described above.

The non-conductive particles having a specific surface area ratio (SB)/(SD) and a shape factor that satisfy the conditions may be produced by appropriately controlling the conditions in a method for producing non-conductive particles that will be described later. In particular, these values may be adjusted within desired ranges by controlling the composition and molecular weight of seed particles.

[Material for Non-conductive Particles: Polyfunctional (Meth)acrylic Monomer]

In the present invention, the non-conductive particles are polymer particles, and include 50% by weight or more of polyfunctional (meth)acrylic monomer unit.

In this application, a "unit" of a monomer is a structural unit of a polymer formed by polymerization of the monomer.

Examples of the polyfunctional (meth)acrylic monomer may include a diacrylate compound, a triacrylate compound, a tetraacrylate compound, a dimethacrylate compound, and a trimethacrylate compound.

Examples of the diacrylate compound may include polyethylene glycol diacrylate, 1,3-butylene glycol diacrylate, 1,6-hexane glycol diacrylate, neopentyl glycol diacrylate, polypropylene glycol diacrylate, 2,2'-bis(4-acryloxypropyloxyphenyl)propane, and 2,2'-bis(4-acryloxydiethoxyphenyl)propane.

Examples of the triacrylate compound may include trimethylolpropane triacrylate, trimethylolethane triacrylate, and tetramethylolmethane triacrylate.

Examples of the tetraacrylate compound may include tetramethylolmethane tetraacrylate.

Examples of the dimethacrylate compound may include ethylene glycol dimethacrylate, diethylene glycol dimethacrylate, triethylene glycol dimethacrylate, polyethylene glycol dimethacrylate, 1,3-butylene glycol dimethacrylate, 1,4-butylene glycol dimethacrylate, 1,6-hexane glycol dimethacrylate, neopentyl glycol dimethacrylate, dipropylene glycol dimethacrylate, polypropylene glycol dimethacrylate, and 2,2'-bis(4-methacryloxydiethoxyphenyl)propane.

Examples of the trimethacrylate compound may include trimethylolpropane trimethacrylate and trimethylolethane trimethacrylate.

As the polyfunctional (meth)acrylic monomer, ethyleneglycol dimethacrylate or trimethylolpropane trimethacrylate is preferably used, and ethylene glycol dimethacrylate is particularly preferably used since thereby the adhesion can be improved and powder falling can be reduced.

The non-conductive particles may be obtained by polymerizing a polymerizable monomer composition to be in a particulate shape. A monomer constituting the polymerizable monomer composition may be appropriately selected so as to obtain a desired property. For example, the polymerizable monomer composition may include the aforementioned polyfunctional (meth)acrylic monomer and, if necessary, an optional monomer which is a monomer other than the polyfunctional (meth)acrylic monomer and copolymerizable with the polyfunctional (meth)acrylic monomer.

[Optional Monomer: Polar Group-Containing Monomer]

The polymerizable monomer composition may include a polar group-containing monomer. The polar group-containing monomer is a monomer that contains a polar group in the molecular structure and copolymerizable with a polyfunctional (meth)acrylic monomer. A polar group refers to a functional group capable of being dissociated in water or a functional group that has polarization, and specific examples thereof may include a carboxyl group, a sulfonic acid group, a hydroxyl group, an amido group, a cationic group, a cyano group, and an epoxy group.

Examples of the polar group-containing monomer may include a carboxyl group-containing monomer, a sulfonic acid group-containing monomer, a hydroxyl group-containing monomer, an amido group-containing monomer, a cationic monomer, a cyano group-containing monomer, an epoxy group-containing monomer, and salts thereof.

Examples of the carboxyl group-containing monomer may include monocarboxylic acid, dicarboxylic acid, dicarboxylic anhydride, and derivatives thereof.

Examples of monocarboxylic acid may include acrylic acid, methacrylic acid, crotonic acid, 2-ethylacrylic acid, isocrotonic acid, $\alpha$-acetoxyacrylic acid, $\beta$-trans-aryloxyacrylic acid, $\alpha$-chloro-$\beta$-E-methoxyacrylic acid, and $\beta$-diaminoacrylic acid.

Examples of dicarboxylic acid may include maleic acid, fumaric acid, itaconic acid, methylmaleic acid, dimethylmaleic acid, phenylmaleic acid, chloromaleic acid, dichloromaleic acid, and fluoromaleic acid.

Examples of a derivative of dicarboxylic acid may include maleic acid esters such as methylallyl maleate, diphenyl maleate, nonyl maleate, decyl maleate, dodecyl maleate, octadecyl maleate, and fluoroalkyl maleate.

Examples of dicarboxylic anhydride may include maleic anhydride, acrylic anhydride, methylmaleic anhydride, and dimethylmaleic anhydride.

Examples of the sulfonic acid group-containing monomer may include vinylsulfonic acid, methylvinylsulfonic acid, (meth)allylsulfonic acid, styrenesulfonic acid, ethyl (meth)acrylate-2-sulfonate, 2-acrylamide-2-methylpropanesulfonic acid, and 3-allyloxy-2-hydroxypropanesulfonic acid.

Examples of the hydroxyl group-containing monomer may include ethylenically unsaturated alcohol such as (meth)allyl alcohol, 3-buten-1-ol, and 5-hexen-1-ol; alkanol esters of ethylenically unsaturated carboxylic acid such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of polyalkylene glycol and (meth)acrylic acid represented by a generic formula $CH_2=CR^1-COO-(C_nH_{2n}O)_m-H$ (wherein m is an integer of 2 to 9, n is an integer of 2 to 4, $R^1$ represents hydrogen or a methyl group); mono(meth)acrylic acid ester including dihydroxy ester of dicarboxylic acid such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; alkylene glycol mono(meth)allyl ethers such as (meth)allyl 2-hydroxyethyl ether, (meth)allyl 2-hydroxypropyl ether, (meth)allyl 3-hydroxypropyl ether, (meth)allyl 2-hydroxybutyl ether, (meth)allyl 3-hydroxybutyl ether, (meth)allyl 4-hydroxybutyl ether, and (meth)allyl 6-hydroxyhexyl ether; polyoxyalkylene glycol mono(meth)allyl ethers such as diethylene gylcol mono(meth)allyl ether and dipropylene gylcol mono(meth)allyl ether; mono(meth)allyl ethers of halogen and hydroxy substitution product of (poly)alkylene glycol such as glycerol mono(meth)allyl ether, (meth)allyl 2-chloro-3-hydroxylpropyl ether, and (meth)allyl 2-hydroxy-3-chloropropyl ether; mono(meth)allyl ethers of polyhydric phenol such as eugenol and isoeugenol, and a halogen substitution product thereof; and alkylene glycol (meth)allyl thioethers such as (meth)allyl 2-hydroxyethyl thioether and (meth)allyl 2-hydroxypropyl thioether.

Examples of the amido group-containing monomer may include acrylamide, methacrylamide, N-methylol acrylamide, and N-methylol methacrylamide.

Examples of the cationic monomer may include dimethylaminoethyl (meth)acrylate and dimethylaminopropyl (meth)acrylate.

Examples of the cyano group-containing monomer may include a vinyl cyanide compound such as acrylonitrile and methacrylonitrile.

Examples of the epoxy group-containing monomer may include glycidyl acrylate and glycidyl methacrylate.

Examples of salts of the carboxyl group-containing monomer, the sulfonic acid group-containing monomer, the hydroxyl group-containing monomer, the amido group-containing monomer, the cationic monomer, and the cyano group-containing monomer may include an alkali metal salt such as a sodium salt and a potassium salt, an alkali earth metal salt such as a calcium salt and a magnesium salt, and an organic amine salt such as an ammonium salt, a monoethanolamine salt, and a triethanolamine salt, which are formed by the monomers enumerated above and a suitable ion capable of being combined therewith.

As the polar group-containing monomer, a carboxyl group-containing monomer and an amido group-containing monomer are preferable. Acrylic acid, methacrylic acid, itaconic acid, and acrylamide are particularly preferable.

As other optional monomer, examples thereof may also include a non-crosslinkable monomer. Examples thereof may include aromatic monovinyl compounds such as styrene, α-methyl styrene, fluorostyrene, and vinyl pyridine; acrylic acid ester monomers such as methyl acrylate, butyl acrylate, and 2-ethylhexylethyl acrylate; methacrylic acid ester monomers such as methyl methacrylate, butyl methacrylate, and 2-ethylhexyl methacrylate; conjugated double bond compounds such as butadiene and isoprene; vinyl ester compounds such as vinyl acetate; and α-olefin compounds such as 4-methyl-1-pentene.

As the optional monomers, one species thereof may be solely used, or two or more species thereof may be used in a combination. Among the optional monomers, styrene is particularly preferable in terms of reactivity.

[Containing Ratio of Monomer]

In the present invention, the containing ratio of the polyfunctional (meth)acrylic monomer unit in the non-conductive particles is 50% by weight or more, preferably 60% by weight or more, and more preferably 70% by weight or more. When the containing ratio of the polyfunctional (meth)acrylic monomer unit is less than the lower limit, the non-conductive particles are fused to one another under a high temperature environment, and anti heat-contraction property of the porous membrane reduces. Thus, a trouble such as a performance reduction at a high-temperature short circuit test may occur.

Usually, the containing ratio of a polymerization unit in a polymer approximately coincides with the containing ratio of the monomer in a polymerizable monomer composition. Therefore, the non-conductive particles for use in the present application may be produced using a monomer composition including the polyfunctional (meth)acrylic monomer in a containing ratio of 50% by weight or more, preferably 60% by weight or more, and further preferably 70% by weight or more based on the total weight of monomers as the polymerizable monomer composition.

[Method for Producing Non-conductive Particles]

The method for polymerizing the polymerizable monomer composition to obtain the non-conductive particles is not particularly limited, and preferred examples thereof may include a method in which the polymerizable monomer composition and, if necessary, other optional components are dissolved or dispersed in a dispersion medium, and the composition is polymerized in the dispersion liquid.

In emulsion polymerization, it is preferable to perform polymerization in a plurality of stages for obtaining desired shape. For example, production of non-conductive particles may be performed by previously polymerizing a portion of the monomer constituting the polymerizable monomer composition to prepare a seed polymer, then effecting absorption of other monomers by the seed polymer, and then effecting polymerization of the monomers while keeping this state. In preparation of the seed polymer, the polymerization may further be divided in a plurality of stages. Specifically, the production may be performed as follows. Firstly a seed polymer A is prepared using a portion of the monomer constituting the polymerizable monomer composition. Then a larger seed polymer B is prepared using the seed polymer A and another portion of the monomer constituting the polymerizable monomer composition. Further, non-conductive particles may be formed using the seed polymer B and the rest of the monomer constituting the polymerizable monomer composition.

In this case, it is preferable that a portion or all (preferably all) of the polar group-containing monomer in the polymerizable monomer composition is used in formation of the seed polymer, because thereby the stability of particles can be ensured. Further, it is preferable that the polyfunctional (meth)acrylic monomer is added to the reaction system in the reaction of the monomers with the seed polymer as the monomer to be reacted with the seed polymer to perform polymerization. It is preferable that to use butyl acrylate as the monomer for forming the seed polymer, since thereby absorption of the polyfunctional (meth)acrylic monomer is promoted.

Since there is such a case wherein polymerization is performed in a plurality of stages in this manner, the polymerizable monomer composition may not necessarily be in a state of a mixture of all monomers of components during the polymerization. When the polymerization is performed in a plurality of stages, it is preferable that the composition of the monomers from which the polymerization units constituting the finally obtained non-conductive particles are derived falls within the aforementioned preferable range.

Examples of a medium for use in polymerization of the polymerizable monomer composition may include water, an organic solvent, and a mixture thereof. As the organic solvent, a solvent which is inactive in radical polymerization and does not inhibit polymerization of the monomers may be used. Specific examples of the organic solvent may include alcohols such as methanol, ethanol, propanol, cyclohexanol, and octanol, esters such as dibutyl phthalate and dioctyl phthalate, ketones such as cyclohexanone, and mixtures thereof. It is preferable to use an aqueous medium such as water as the dispersion medium and perform emulsion polymerization as the polymerization.

The quantity ratio in a reaction of the monomer with the seed polymer in terms of a ratio of the monomer with respect to one part by weight of seed polymer particles is preferably 2 to 19 parts by weight, more preferably 3 to 16 parts by weight, and further preferably 4 to 12 parts by weight. When the using amount of the monomer is 2 parts by weight or more, the mechanical strength and heat resistance of particles to be obtained can be enhanced. When the using amount of the monomer is 19 parts by weight or less, the quantity ratio falls within such a range that the monomer absorption capacity of the seed polymer particles is not insufficient, and the range of the amount of the monomer that is not absorbed by the seed polymer particles is kept small. Therefore, the particle diameter can be well controlled, and generation of large particles having a wide particle diameter distribution and a large amount of microparticles can be prevented.

As a specific operation of polymerization, there are a method wherein the monomer is added to an aqueous dispersion of the seed polymer particles at a time, and a method wherein the monomer is added as aliquots or continuously while performing polymerization. It is preferable that absorption of the monomer by the seed polymer particles is effected before crosslinking substantially occurs in the seed polymer particles by initiation of polymerization.

When the monomer is added at or after the middle stage of polymerization, the monomer is not absorbed by the seed polymer particles. As a result, a large amount of microparticles are generated, and polymerization stability deteriorates. Therefore, the polymerization reaction may not be maintained. For this reason, it is preferable that the all monomers are added to the seed polymer particles before initiation of polymerization or the addition of the all monomers is completed before the polymerization conversion rate reaches about 30%. In particular, it is preferable to add the monomer to the aqueous dispersion of the seed polymer particles and perform stirring before initiation of polymerization to effect absorption by the seed polymer particles, and thereafter initiate polymerization.

In addition to the polymerizable monomer composition and the medium, the reaction system for polymerization may include an optional component. Specifically, a component such as a polymerization initiator, a chain transfer agent, a suspension protective agent, and a surfactant may be added. As the polymerization initiator, a general water-soluble radical polymerization initiator or an oil-soluble radical polymerization initiator may be used. It is preferable to use the water-soluble polymerization initiator since it is thereby possible to reduce initiation of polymerization of the monomer that is not absorbed by the seed polymer particles in an aqueous phase. Examples of the water-soluble radical polymerization initiator may include potassium persulfate, sodium persulfate, cumene hydroperoxide, hydrogen peroxide, and a redox system initiator that are a combination of these reducing agents. Examples of the oil-soluble polymerization initiator may include benzoyl peroxide, $\alpha,\alpha$'-azobisisobutyronitrile, t-butylperoxy-2-ethylhexanoate, and 3,5,5-trimethylhexanoylperoxide. Among the oil-soluble polymerization initiators, t-butylperoxy-2-ethylhexanoate may be preferably used. It is preferable to add a small amount of water-soluble polymerization inhibitor such as potassium dichromate, ferric chloride, and hydroquinone to the polymerization reaction since thereby generation of microparticles can be suppressed.

A generally used chain transfer agent may be used for controlling the molecular weight of a resin. The chain transfer agent is not particularly limited, and mercaptans such as octyl mercaptan, dodecyl mercaptan, and tert-dodecyl mercaptan, n-octyl 3-mercaptopropionate, terpinolene, carbon tetrabromide, an $\alpha$-methylstyrene dimer, etc. may be used.

As the surfactant, a usually used surfactant may be used. Examples thereof may include anionic emulsifiers such as sodium dodecylbenzenesulfonate, sodium laurylsulfate, sodium dialkylsulfosuccinate, and a naphthalenesulfonic acid formalin condensate. Further, a nonionic surfactant such as polyoxyethylene nonyl phenyl ether, polyethylene glycol monostearate, and sorbitane monostearate may be used in combination. Preferred examples of the suspension protective agent may include polyvinyl alcohol, carboxylmethyl cellulose, sodium polyacrylate, and micropowders of inorganic compound.

In the present invention, the most preferable combination of the polymerization initiator and a stabilizing agent to reproducibly control and obtain non-conductive particles having a target particle diameter and narrow particle diameter distribution while the stability of the system in polymerization is ensured is to use the water-soluble polymerization initiator as the polymerization initiator, and a surfactant as the stabilizing agent at a concentration that is equal to or less than C.M.C. concentration in the polymerization system and is near the C.M.C. concentration (specifically, 0.3 to 1.0 times the C.M.C. concentration).

[Containing Ratio of Non-conductive Particles in Porous Membrane]

The lower limit of containing ratio of the non-conductive particles based on the total weight of the porous membrane for a secondary battery according to the present invention is preferably 70% by weight or more, and more preferably 80% by weight or more. The upper limit is preferably 97% by weight or less, and more preferably 95% by weight or less. When the containing ratio of the non-conductive particles in the porous membrane for a secondary battery falls within the range, a gap can be formed between the non-conductive particles to an extent whereby movement of ions is not hindered while the non-conductive particles have contacting portions at which particles contacts each other. Therefore, when the average particle diameter of the non-conductive particles falls within the range, the strength of the porous membrane is improved, and the short circuit of the battery can be prevented. Accordingly, this is preferable.

[Binder for Porous Membrane]

The porous membrane for a secondary battery according to the present invention includes a binder for a porous membrane.

As the binder for a porous membrane for use in the present invention, a variety of substances may be used as long as they have a binding property. Examples thereof may include a diene polymer, a (meth)acrylic polymer, a fluorine polymer, and a silicon polymer. Among them, a (meth)acrylic polymer is preferable since it can give excellent retention capability and flexibility to the non-conductive particles in the resulting porous membrane, with which a battery that is stable to oxidation and reduction and excellent in lifetime property is easily obtained. Further, the (meth)acrylic polymer is preferable in view of affinity with the non-conductive particles used in the present invention. Moreover, the (meth)acrylic polymer is particularly preferably for use in the present invention since the (meth)acrylic polymer are particularly excellent in bringing about the aforementioned properties in a porous membrane in which not the inorganic fine particles such as alumina but the organic polymer particles are used as the non-conductive particles.

The (meth)acrylic polymer is a polymer including a polymerization unit of an acrylate and/or methacrylate monomer. In the present application, "(meth)acrylic" means acrylic and/or methacrylic, and "(meth)acrylate" means acrylate and/or methacrylate.

Examples of the acrylate and/or methacrylate monomer may include alkyl acrylate such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and alkyl methacrylate such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. Among them, alkyl acrylate is preferable, and one or more selected from the group consisting of ethyl acrylate, butyl acrylate, and 2-ethylhexyl acrylate is preferable. Butyl acrylate is more preferable.

The containing ratio of polymerization unit of the (meth)acrylic acid ester monomer in the (meth)acrylic polymer is preferably 50 to 98% by weight, more preferably 60 to 97.5% by weight, and particularly preferably 70 to 95% by weight.

It is preferable that the (meth)acrylic polymer includes, in addition to the polymerization unit of the (meth)acrylic acid ester monomer, a polymerization unit of an additional monomer.

Examples of the polymerization unit of the additional monomer may include a polymerization unit of a vinyl monomer having an acid group, a polymerization unit of an $\alpha,\beta$-unsaturated nitrile monomer, and a polymerization unit of a monomer having a crosslinkable group.

Examples of the vinyl monomer having an acid group may include a monomer having a -COOH group (carboxylic acid group), a monomer having a -OH group (hydroxyl group), a monomer having a -SO$_3$H group (sulfonic acid group), a monomer having a -PO$_3$H$_2$ group, a monomer having a -PO(OH)(OR) group (wherein R represents a hydrocarbon group), and a monomer having a lower polyoxyalkylene group. Further, an acid anhydride in which a carboxylic acid group is generated by hydrolysis may be similarly used.

Examples of the monomer having a carboxylic acid group may include monocarboxylic acid, dicarboxylic acid, anhydrides of dicarboxylic acid, and derivatives thereof. Examples of monocarboxylic acid may include acrylic acid, methacrylic acid, crotonic acid, 2-ethylacrylic acid, isocrotonic acid, $\alpha$-acetoxyacrylic acid, $\beta$-trans-aryloxyacrylic acid, $\alpha$-chloro-$\beta$-E-methoxyacrylic acid, and $\beta$-diaminoacrylic acid. Examples of dicarboxylic acid may include maleic acid, fumaric acid, itaconic acid, methylmaleic acid, dimethylmaleic acid, phenylmaleic acid, chloromaleic acid, dichloromaleic acid, fluoromaleic acid, and maleate such as methylallyl maleate, diphenyl maleate, nonyl maleate, decyl maleate, dodecyl maleate, octadecyl maleate, and fluoroalkyl maleate. Examples of acid anhydrides of dicarboxylic acid may include maleic anhydride, acrylic anhydride, methylmaleic anhydride, and dimethylmaleic anhydride.

Examples of the monomer having a hydroxyl group may include ethylenically unsaturated alcohol such as (meth)allyl alcohol, 3-buten-1-ol, and 5-hexen-1-ol; alkanol esters of ethylenically unsaturated carboxylic acid such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of polyalkylene glycol and (meth)acrylic acid represented by a generic formula $CH_2=CR^1-COO-(C_nH_{2n}O)_m-H$ (wherein m is an integer of 2 to 9, n is an integer of 2 to 4, $R^1$ represents hydrogen or a methyl group); mono(meth)acrylic acid ester including dihydroxy ester of dicarboxylic acid such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; alkylene glycol mono(meth)allyl ethers such as (meth)allyl 2-hydroxyethyl ether, (meth)allyl 2-hydroxypropyl ether, (meth)allyl 3-hydroxypropyl ether, (meth)allyl 2-hydroxybutyl ether, (meth)allyl 3-hydroxybutyl ether, (meth)allyl 4-hydroxybutyl ether, and (meth)allyl 6-hydroxyhexyl ether; polyoxyalkylene glycol mono(meth)allyl ethers such as diethylene gylcol mono(meth)allyl ether and dipropylene gylcol mono(meth)allyl ether; mono(meth)allyl ethers of halogen and hydroxy substitution product of (poly)alkylene glycol such as glycerol mono(meth)allyl ether, (meth)allyl 2-chloro-3-hydroxylpropyl ether, and (meth)allyl 2-hydroxy-3-chloropropyl ether; mono(meth)allyl ethers of polyhydric phenol such as eugenol and isoeugenol, and a halogen substitution product thereof; and alkylene glycol (meth)allyl thioethers such as (meth)allyl 2-hydroxyethyl thioether and (meth)allyl 2-hydroxypropyl thioether.

Examples of the monomer having a sulfonic acid group may include vinylsulfonic acid, methylvinylsulfonic acid, (meth)allylsulfonic acid, styrenesulfonic acid, ethyl (meth)acrylate-2-sulfonate, 2-acrylamide-2-methylpropanesulfonic acid, and 3-allyloxy-2-hydroxypropanesulfonic acid.

Examples of the monomer having a $-PO_3H_2$ group and/or a $-PO(OH)(OR)$ group (wherein R represents a hydrocarbon group) may include 2-(meth)acryloyloxyethyl phosphate, methyl-2-(meth)acryloyloxyethyl phosphate, and ethyl-(meth)acryloyloxyethyl phosphate.

Examples of the monomer having a lower polyoxyalkylene group may include poly(alkylene oxide) such as poly(ethylene oxide).

Among them, the monomer having a carboxylic acid group is preferable since it brings about excellent adhesion to the electrode material layer or the organic separator which will be described later ,and it efficiently captures transition metal ions eluted from a positive electrode active material. In particular, monocarboxylic acid having a carboxylic acid group and five or less carbon atoms such as acrylic acid and methacrylic acid and dicarboxylic acid having two carboxylic acid groups per molecule and five or less carbon atoms such as maleic acid and itaconic acid are preferable. In view of high storage stability of the resulting slurry, acrylic acid, methacrylic acid, and itaconic acid are further preferable.

The containing ratio of the polymerization unit of the vinyl monomer having an acid group in the binder for a porous membrane is preferably 1.0 to 3.0% by weight, and more preferably 1.5 to 2.5% by weight.

Examples of the α,β-unsaturated nitrile monomer may include acrylonitrile, methacrylonitrile, α-chloroacrylonitrile, α-ethylacrylonitrile, and a mixture thereof. Among them, acrylonitrile and methacrylonitrile are preferable in view of improvement in mechanical strength of the porous membrane and improvement in binding power in the porous membrane.

The containing ratio of the polymerization unit of the α,β-unsaturated nitrile monomer in the binder for a porous membrane is preferably 1.0 to 50% by weight, more preferably 1.0 to 40% by weight, and particularly preferably 1.0 to 30% by weight.

Examples of the monomer having a crosslinkable group may include a monofunctional monomer having a crosslinkable group and one olefinic double bond per molecule, and a polyfunctional monomer having two or more olefinic double bonds per molecule.

The crosslinkable group in the monofunctional monomer having one olefinic double bond per molecule is preferably one or more selected from the group consisting of an epoxy group, an N-methylolamido group, an oxetanyl group, and an oxazoline group, and more preferably an epoxy group since therewith crosslinking and crosslink density adjustment can be easily performed.

Examples of an epoxy group-containing monomer may include a monomer containing a carbon-carbon double bond and an epoxy group, and a monomer containing a halogen atom and an epoxy group.

Examples of the monomer containing a carbon-carbon double bond and an epoxy group may include an unsaturated glycidyl ether such as vinyl glycidyl ether, allyl glycidyl ether, butenyl glycidyl ether, and o-allylphenyl glycidyl ether; monoepoxide of diene or polyene such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxide such as 3,4-epoxy-1-butene, 1,2-epoxy-5-hexene, and 1,2-epoxy-9-decene; and glycidyl esters of an unsaturated carboxylic acid such as glycidyl acrylate, glycidyl methacrylate, glycidyl crotonate, glycidyl 4-heptanoate, glycidyl sorbate, glycidyl linoleate, glycidyl 4-methyl-3-pentenoate, glycidyl ester of 3-cyclohexene carboxylic acid, and glycidyl ester of 4-methyl-3-cyclohexene carboxylic acid.

Examples of the monomer containing a halogen atom and an epoxy group may include epihalohydrin such as epichlorohydrin, epibromohydrin, epiiodohydrin, epifluorohydrin, and β-methylepichlorohydrin; p-chlorostyrene oxide; and dibromophenyl glycidyl ether.

Examples of an N-methylolamido group-containing monomer may include (meth)acrylamide having a methylol group such as N-methylol (meth)acrylamide.

Examples of an oxetanyl group-containing monomer may include 3-((meth)acryloyloxymethyl)oxetane, 3-((meth)acryloyloxymethyl)-2-trifluoromethyloxetane, 3-((meth)acryloyloxymethyl)-2-phenyloxetane, 2-((meth)acryloyloxymethyl)oxetane, and 2-((meth)acryloyloxymethyl)-4-trifluoromethyloxetane.

Examples of an oxazoline group-containing monomer may include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

The polyfunctional monomer having two or more olefinic double bonds per molecule is preferably allyl acrylate or allyl methacrylate, trimethylolpropane triacrylate, trimethylolpropane methacrylate, dipropylene glycol diallyl ether, polyglycol diallyl ether, triethyleneglycol divinyl ether, hydroquinone diallyl ether, tetraallyloxyethane, or other allyl or vinyl ether of polyfunctional alcohol, tetraethylene glycol diacrylate, triallyl amine, trimethylolpropane diallyl ether, methylenebisacrylamide, and/or divinylbenzene. Specific examples thereof may include allyl acrylate, allyl methacrylate, trimethylolpropane triacrylate, and/or trimethylolpropane methacrylate.

Among the polyfunctional monomers having two or more olefinic double bonds per molecule, acrylate or methacrylate having an allyl group such as allyl acrylate or allyl methacrylate is preferable in view of their ability to improve crosslink density which leads to improvement in the crosslink density and high copolymerization property.

The containing ratio of the polymerization unit of the monomer having a crosslinkable group in the binder for a porous membrane is preferably 0.01 to 2.0% by weight, more preferably 0.05 to 1.5% by weight, and particularly preferably 0.1 to 1.0% by weight. When the containing ratio of the polymerization unit of the monomer having a crosslinkable group in the binder for a porous membrane falls within the range, elution into an electrolyte solution can be suppressed and it is possible to obtain superior porous membrane strength and long term cycle property.

The binder for a porous membrane for use in the present invention may zinclude, in addition to the polymerization unit based on the aforementioned monomers, a polymerization unit based on a monomer copolymerizable with the aforementioned monomers. Examples of the monomer copolymerizable with the monomers may include a halogen atom-containing monomer such as vinyl chloride and vinylidene chloride; vinyl esters such as vinyl acetate, vinyl propionate, and vinyl butyrate; vinyl ethers such as methyl vinyl ether, ethyl vinyl ether, and butyl vinyl ether; vinyl ketones such as methyl vinyl ketone, ethyl vinyl ketone, butyl vinyl ketone, hexyl vinyl ketone, and isopropenyl vinyl ketone; a heterocycle ring-containing vinyl compound such as N-vinylpyrrolidone, vinyl pyridine, and vinyl imidazole; and acrylamide. The monomers may be subjected to graft copolymerization by an appropriate procedure to obtain the binder having the aforementioned features.

The lower limit of the containing ratio of the binder for a porous membrane based on the total weight of the porous membrane for a secondary battery according to the present invention is preferably 3% by weight or more, and more preferably 5% by weight or more. The upper limit is preferably 20% by weight or less, and more preferably 15% by weight or less. When the containing ratio of the binder falls within such a range, both improvement in the strength of the porous membrane and securment of pore space existence can be achieved. As a result, the ability to prevent short-circuit and other battery properties can be improved.

In the porous membrane for a secondary battery according to the present invention, it is preferable that a ratio of the contained amount of the non-conductive particles with respect to the contained amount of the binder for a porous membrane falls within a range of 5 to 30 as the ratio of (weight of non-conductive particles) / (weight of binder for porous membrane). When the ratio falls within this range, both the ability to prevent sort circuit at high-temperature and the excellent cycle property can be simultaneously maintained.

The binder for a porous membrane for use in the present invention is usually prepared and stored as a dispersion liquid in which the binder for a porous membrane is dispersed in a dispersion medium (water or organic solvent), and used as a material in the production of a slurry for a porous membrane. In the present invention, water is preferably used as the dispersion medium in view of a low impact on the environment and a high drying speed. When an organic solvent is used as the dispersion medium, an organic solvent such as N-methylpyrrolidone (NMP) is used.

When the binder for a porous membrane is dispersed in the form of particles in a dispersion medium, the number average particle diameter (diameter of dispersed particles) of the binder dispersed in the form of particles is preferably 50 to 500 nm, more preferably 70 to 400 nm, and the most preferably 100 to 250 nm. When the number average particle diameter of the binder for a porous membrane falls within this range, the strength and flexibility of the porous membrane become favorable.

When the binder for a porous membrane is dispersed in the form of particles in the dispersion medium, the solid content concentration in the dispersion liquid is usually 15 to 70% by weight, preferably 20 to 65% by weight, and more preferably 30 to 60% by weight. When the solid content concentration falls within this range, the workability in the production of the slurry for a porous membrane, which will be described later, becomes favorable.

The glass transition temperature (Tg) of the binder for a porous membrane for use in the present invention is preferably -50 to 25°C, more preferably -45 to 15°C, and particularly preferably -40 to 5°C. When Tg of the binder for a porous membrane falls within this range, the porous membrane according to the present invention has excellent strength and flexibility. As a result, the output property of the secondary battery using the porous membrane can be improved.

The glass transition temperature of the binder for a porous membrane may be adjusted by combining a variety of monomers.

A method for producing a polymer that is the binder for use in the present invention is not particularly limited, and any method such as a solution polymerization method, a suspension polymerization method, a bulk polymerization method, and an emulsion polymerization method may be used. As a polymerization reaction, any reactions such as ion polymerization, radical polymerization, and living radical polymerization may be adopted. Examples of a polymerization initiator for use in polymerization may include organic peroxides such as lauroyl peroxide, diisopropyl peroxydicarbonate, di-2-ethylhexyl peroxydicarbonate, tert-butyl peroxypivalate, and 3,5,5-trimethylhexanoyl peroxide, an azo compound such as $\alpha,\alpha$'-azobisisobutylonitrile, ammonium persulfate, and potassium persulfate.

[Heavy Metal Scavenging Compound]

It is preferable that the porous membrane for a secondary battery according to the present invention includes a heavy metal scavenging compound in addition to the non-conductive particles and the binder for a porous membrane.

When the porous membrane for a secondary battery according to the present invention includes the heavy metal scavenging compound, transition metal ions eluted into the electrolyte solution can be captured during charging and discharging of the secondary battery using the porous membrane. Therefore, decrease in the cycle property and decrease in the safety of the secondary battery due to the transition metal ions can be prevented.

The heavy metal scavenging compound is not particularly limited, and any compound having a heavy metal capturing function may be used. The heavy metal scavenging compound is preferably selected from the group consisting of an aminocarboxylic acid-based chelate compound, a phosphonic acid-based chelate compound, gluconic acid, citric acid, malic acid, and tartaric acid. Among them, a chelate compound capable of selectively capturing transition metal ions without capturing lithium ions is particularly used, and in particular, aminocarboxylic acid-based chelate compounds and phosphonic acid-based chelate compound such as the following compounds are preferably used.

The aminocarboxylic acid-based chelate compound is preferably selected from the group consisting of ethylene diamine tetraacetate (it may be referred to hereinbelow as "EDTA"), nitrilotriacetate (it may be referred to hereinbelow as "NTA"), trans-1,2-diaminocyclohexane tetraacetic acid (it may be referred to hereinbelow as "DCTA"), diethylene-triamine pentaacetic acid (it may be referred to hereinbelow as "DTPA"), bis-(aminoethyl)glycol ether-N,N,N',N'-tetraacetic acid (it may be referred to hereinbelow as "EGTA"), N-(2-hydroxyethyl)ethylenediamine-N,N',N'-triacetic acid (it may be referred to hereinbelow as "HEDTA"), and dihydroxyethyl glycine (it may be referred to hereinbelow as "DHEG").

As the phosphonic acid-based chelate compound, 1-hydroxyethane-1,1-diphosphonic acid (it may be referred to hereinbelow as "HEDP") is preferable.

The containing amount of the heavy metal scavenging compound is preferably 0.001 to 1.0 parts by weight, more preferably 0.005 to 0.5 parts by weight, and particularly preferably 0.01 to 0.3 parts by weight, based on 100 parts by weight (in terms of solid content) of the binder for a porous membrane. When the containing amount of the heavy metal scavenging compound is less than 0.001 parts by weight, the ability of capturing transition metal ions is poor, and therefore the cycle property of a secondary battery may deteriorate. Accordingly, this is not preferable. When the containing amount is more than 1.0 part by weight, the transition metal capturing effect is not expected by that amount, and the cycle property of a secondary battery using the porous membrane according to the present invention may deteriorate. Accordingly, this is not preferable.

[Other Optional Components of Porous Membrane]

The porous membrane may further include optional components in addition to the aforementioned components. Examples of the optional components may include a component such as a wetting agent, a dispersant, a leveling agent, an antioxidant, a binding agent other than the aforementioned binder for a porous membrane, a thickener, a defoaming agent, and an electrolyte additive having a function of, e.g., inhibiting decomposition of an electrolyte solution. These are not particularly limited if they do not adversely affect a battery reaction.

Examples of the dispersant may include an anionic compound, a cationic compound, a nonionic compound, and a polymer compound. The dispersant is selected in accordance with the non-conductive particles to be used. The containing ratio of the dispersant in the porous membrane is preferably within a range that does not affect the battery properties, and specifically 10% by weight or less.

Examples of the wetting agent or the leveling agent may include a surfactant such as an alkyl surfactant, a silicon surfactant, a fluorine surfactant, and a metal surfactant. By adding the surfactant, repelling during coating can be prevented and the smoothness of an electrode can be improved.

Examples of the antioxidant may include a phenol compound, a hydroquinone compound, an organic phosphorus compound, a sulfur compound, a phenylene diamine compound, and a polymer-type phenol compound. The polymer-type phenol compound is a polymer having a phenol structure in the molecule, and a polymer-type phenol compound having a weight average molecular weight of 200 to 1,000, and preferably 600 to 700 is preferably used.

As the binding agent other than the aforementioned binder for a porous membrane, polytetrafluoroethylene (PTFE), polyvinylidene fluoride (PVDF), a polyacrylic acid derivative, a polyacrylonitrile derivative, or a soft polymer that is used as a binding agent for the electrode material layer, which will be described later, may be used.

Examples of the thickener may include a cellulose polymer such as carboxymethyl cellulose, methyl cellulose and hydroxypropyl cellulose, and ammonium salts and alkali metal salts thereof; (modified) poly(meth)acrylic acid, and ammonium salts thereof and alkali metal salts thereof; polyvinyl alcohols such as (modified) polyvinyl alcohol, a copolymer of acrylic acid or acrylic acid salt and vinyl alcohol, and a copolymer of maleic anhydride or maleic acid or fumaric acid and vinyl alcohol; polyethylene glycol, polyethylene oxide, polyvinyl pyrrolidone, modified polyacrylic acid, oxide starch, phosphoric acid starch, casein, a variety of modified starch, and acrylonitrile-butadiene copolymer hydride. When the using amount of thickener falls within this range, the coating property and the adhesion of an electrode material layer or an organic separator becomes favorable. In the present application, "(modified) poly" means "unmodified poly" or "modified poly".

Other examples thereof may include nano-fine particles such as fumed silica and fumed alumina. By adding the nano-fine particles, the thixotropy of the slurry for a porous membrane can be controlled, and the leveling property of the obtained porous membrane can be further improved.

The containing ratio of the optional components in the porous membrane are preferably within a range which does not affect the battery properties. Specifically, the containing ratio of each components is 10% by weight or less, and the total containing ratio of the optional components is 40% by weight or less, and more preferably 20% by weight or less.

[Method for Producing Porous Membrane]

Examples of a method for producing the porous membrane according to the present invention may include 1) a method in which the slurry for a porous membrane containing the non-conductive particles, the binder for a porous membrane, and the medium is applied onto a specific substrate to obtain a slurry layer, and then the slurry layer is dried; and 2) a method in which a substrate is immersed in the slurry for a porous membrane containing the non-conductive particles, the binder for a porous membrane, and the medium, and then the immersed substrate is dried. Among them, the method 1) is the most preferable since the membrane thickness of the porous membrane is easily controlled. This method will be described hereinbelow as the method for producing a porous membrane for a secondary battery according to the present invention.

[Slurry for Porous Membrane]

The slurry for a porous membrane for use in the production method according to the present invention includes the non-conductive particles, the binder for a porous membrane, and the medium. Examples of the non-conductive particles and the binder for a porous membrane may include the same as those described in the porous membrane.

The medium is not particularly limited as long as the aforementioned solid contents (the non-conductive particles, the binder for a porous membrane, and the optional components) can be uniformly dispersed.

As the medium for use in the slurry for a porous membrane, water or an organic solvent may be used. Examples of the organic solvent may include alicyclic hydrocarbons such as cyclopentane and cyclohexane; aromatic hydrocarbons such as toluene, xylene, and ethylbenzene; ketones such as acetone, ethyl methyl ketone, diisopropyl ketone, cyclohexanone, methylcyclohexane, and ethylcyclohexane; a chlorinated aliphatic hydrocarbon such as methylene chloride, chloroform, and carbon tetrachloride; esters such as ethyl acetate, butyl acetate, $\gamma$-butyrolactone, and $\varepsilon$-caprolactone; acylonitriles such as acetonitrile and propionitrile; ethers such as tetrahydrofuran and ethylene glycol diethyl ether; alcohols such as methanol, ethanol, isopropanol, ethylene glycol, and ethylene gylcol monomethyl ether; and amides such as N-methylpyrrolidone and N,N-dimethylformamide.

One of these media may be solely used or two or more species thereof may be mixed and used as a mixed solvent. Among them, a medium which provides excellent dispersibility of the non-conductive particles and has a low boiling point and high volatility is preferable since the medium can be removed in a short period of time at low temperature. Specifically, acetone, toluene, cyclohexanone, cyclopentane, tetrahydrofuran, cyclohexane, xylene, water, or N-methylpyrrolidone, or a mixture solvent thereof is preferable.

When a (meth)acrylic polymer described above is used as the binder for a porous membrane, it is particularly preferable that an aqueous medium such as water is used as the medium and the slurry for a porous membrane is obtained as an aqueous dispersion. This is because a production process can be simplified and a process load can be reduced.

The solid content concentration of the slurry for a porous membrane may be appropriately adjusted to such a concentration that the coating with the slurry and immersion in the slurry can be performed and the slurry has a viscosity to the extent such that the slurry has fluidity, and is generally about 10 to about 50% by weight.

Components other than the solid content are components that are to be volatilized at the drying step. For example, in addition to the aforementioned medium, the component also includes a medium in which the non-conductive particles and the binder for a porous membrane have been dissolved or dispersed during preparation and addition of the non-conductive particles and the binder for a porous membrane.

The slurry for a porous membrane according to the present invention is for forming the porous membrane according to the present invention. Therefore, the containing ratio of the non-conductive particles, the binder for a porous membrane, and the optional components (the aforementioned components as the optional components for a porous membrane) in the total amount of solid content of the slurry for a porous membrane may be the aforementioned ratio regarding the porous membrane according to the present invention.

Further, in addition to the non-conductive particles, the binder for a porous membrane, the medium, and the optional components described as the optional components for a porous membrane, the slurry for porous membrane may include other optional components such as a dispersant and an electrolyte additive having a function of suppressing decomposition of electrolytic solution. These are not particularly limited as long as they do not adversely affect a battery reaction.

[Method for Producing Slurry for Porous Membrane]

The method for producing the slurry for a porous membrane is not particularly limited. The slurry for a porous membrane may be obtained by mixing the non-conductive particles, the binder for a porous membrane, the medium, and the optional components that are added if necessary.

In the present invention, by using the aforementioned components, it is possible to obtain the slurry for a porous membrane in which the non-conductive particles are highly dispersed regardless of a mixing method and a mixing order. The device for mixing is not particularly limited as long as it is a device capable of uniformly mixing the components, and a homomixer, a ball mill, a sand mill, a pigment disperser, a grinding machine, an ultrasonic disperser, a homogenizer, a planetary mixer, etc. may be used. Among them, it is particularly preferable to use the homomixer since it can apply appropriate dispersion shear.

In view of uniform coating property and stability of the slurry with the lapse of time, the viscosity of the slurry for a porous membrane is preferably 10 mPa·S to 10,000 mPa·S, and further preferably 50 to 500 mPa·S. The viscosity is a value measured at 25°C and a rotation speed of 60 rpm with a B-type viscometer.

In an embodiment of the method for producing the porous membrane according to the present invention, the substrate is a component to be used in the battery, wherein the component preferably has a porous membrane. Specifically, it is preferable that an electrode or a separator for a secondary battery is used as the substrate and the porous membrane is formed on the substrate.

In the method for producing the porous membrane according to the present invention, the porous membrane may be formed on a substrate other than the electrode or the organic separator. When the porous membrane according to the present invention is formed on the substrate other than the electrode or the organic separator, the porous membrane may be peeled off the substrate and may be used by directly layered it on the electrode or the organic separator during assembling the battery. In this case, as the substrate, an appropriate release film such as a publicly known release film may be used.

The method for applying the slurry for a porous membrane onto the substrate is not particularly limited. Examples thereof may include a doctor blade method, a dipping method, a reverse roll method, a direct roll method, a gravure method, an extrusion method, and a brush application method. Among them, the dipping method and the gravure method are preferable since thereby a uniform porous membrane can be obtained.

Examples of the method for drying the slurry layer that has been obtained by application may include drying by warm air, hot air, and low humid air, vacuum drying, and drying methods by irradiating (far) infrared radiation, electron beam, etc. The drying temperature may be changed in accordance with the type of the medium used. For example, when a medium having a low volatility such as N-methylpyrrolidone is used, it is preferable to perform drying with a blower dryer at a high temperature of 120°C or higher for completely removing the medium. On the other hand, when a medium having a high volatility is used, the slurry layer may be dried at a low temperature of 100°C or lower. When the porous membrane is formed on the organic separator which will be described later, drying at a low temperature of 100°C or lower is preferable. This is because drying has to be performed without causing contraction of the organic separator.

If necessary, pressure treatment using metal mold press, roll press, etc. may be then performed for improving adhesion between the electrode material layer and the porous membrane. However, at this time, when the pressure treatment is excessively performed, the porosity of the porous membrane may be reduced. Therefore, pressure and a pressurization time are appropriately controlled.

[Shape of Porous Membrane]

The thickness of the porous membrane is not particularly limited, and may be appropriately set in accordance with application or application field of the porous membrane. When it is too thin, a uniform membrane cannot be formed. On the other hand, when it is too thick, the capacity per volume (weight) in the battery is decreased. Therefore, the thickness is preferably 1 to 10 $\mu$m, and more preferably 2 to 7 $\mu$m.

Particularly preferably, the porous membrane according to the present invention is formed on the surface of the electrode material layer of the electrode or the organic separator of the secondary battery, and used as a protective film of the electrode material layer or a separator. The electrode of a secondary battery on which the porous membrane is formed is not particularly limited, and the porous membrane according to the present invention may be formed on an electrode having a variety of configurations. The porous membrane may be formed on the surface of a positive electrode or a negative electrode of a secondary battery, or on both the surfaces of a positive electrode and a negative electrode.

[Electrode for Secondary Battery]

The electrode for a secondary battery according to the present invention has a current collector; an electrode material layer which includes an electrode active material and a binding agent for an electrode material layer and is attached to the current collector; and the porous membrane according to the present invention which is layered on the surface of the electrode material layer.

[Current Collector]

The current collector is not particularly limited as long as it has electric conductivity and electrochemical durability. In view of heat resistance, preferable material there of may be a metal material such as iron, copper, aluminum, nickel, stainless steel, titanium, tantalum, gold, and platinum. Among them, aluminum is particularly preferable for a positive electrode of a lithium ion secondary battery, and copper is particularly preferable for a negative electrode of the lithium ion secondary battery. The shape of the current collector is not particularly limited, and a sheet-shaped current collector having a thickness of about 0.001 to about 0.5 mm is preferable. It is preferable to roughen the surface of the current collector in advance of its use, for enhancing the adhesion strength of the electrode material layer. Examples of the surface roughening method may include a mechanical polishing method, an electropolishing method, and a chemical polishing method. In the mechanical polishing method, polishing cloth or paper having abrasive particles fixed thereon, a grindstone, an emery wheel, or a wire brush provided with, e.g., steel wire is used.

Further, for improving the bonding strength and conductivity of the electrode material layer, an intermediate layer may be formed on the surface of the current collector.

[Electrode Active Material]

The electrode active material for use in the electrode for a secondary battery according to the present invention may be selected depending on the secondary battery in which the electrode is used. Examples of the secondary battery may include a lithium ion secondary battery and a nickel-metal hydride secondary battery.

When the electrode for a secondary battery according to the present invention is used as the positive electrode of the lithium ion secondary battery, the electrode active material for the positive electrode (positive electrode active material) of the lithium ion secondary battery is roughly classified into that composed of an inorganic compound and that composed of an organic compound.

Examples of the positive electrode active material composed of an inorganic compound may include transition metal oxide, complex oxide of lithium and transition metal, and transition metal sulfide. As the transition metal, Fe, Co, Ni, Mn, etc. is used. Specific examples of the inorganic compound for use in the positive electrode active material may include lithium-containing complex metal oxides such as $LiCoO_2$, $LiNiO_2$, $LiMnO_2$ $LiMn_2O_4$, $LiFePO_4$, and $LiFeVO_4$; transition metal sulfide such as $TiS_2$, $TiS_3$, and amorphous $MoS_2$; and transition metal oxides such as $Cu_2V_2O_3$, amorphous $V_2O$-$P_2O_5$, $MoO_3$, $V_2O_5$, and $V_6O_{13}$. These compounds may be partially element-substituted. As the positive electrode active material composed of an organic compound, a conductive polymer compound such as polyacetylene and poly-p-phenylene may be used. An iron-based oxide having poor electric conductivity may be subjected to reduction firing in the presence of a carbon source substance so as to be used as an electrode active material covered with a carbon material. Further, these compounds may be partially element-substituted.

The positive electrode active material for the lithium ion secondary battery may be a mixture of the aforementioned inorganic compound and organic compound. The particle diameter of the positive electrode active material is appropriately selected in accordance with balance with optional components of the battery. In view of improvement in battery properties such as rate property and cycle property, the 50% cumulative volume diameter thereof is usually 0.1

to 50 μm, and preferably 1 to 20 μm. When the 50% cumulative volume diameter falls within this range, a secondary battery having a large charge and discharge capacity can be obtained, and the positive electrode active material is easily handled during production of the slurry for an electrode and the electrode. The 50% cumulative volume diameter may be determined by measuring particle size distribution by laser diffraction.

When the electrode for a secondary battery according to the present invention is used for the negative electrode of the lithium ion secondary battery, examples of the electrode active material for the negative electrode of the lithium ion secondary battery (negative electrode active material) may include a carbonaceous material such as amorphous carbon, graphite, natural graphite, mesocarbon microbeads, and carbon fiber derived from pitch, and a conductive polymer compound such as polyacene. Further, as the negative electrode active material, metal such as silicon, tin, zinc, manganese, iron, and nickel, an alloy thereof, or oxide or sulfate of the metal or the alloy is used. In addition, metal lithium, a lithium alloy such as Li-Al, Li-Bi-Cd, and Li-Sn-Cd, lithium transitional metal nitride, silicon, etc. may be used. As the electrode active material, a material having a surface to which adhesion of a conductivity-imparting material is effected by a mechanical modifying method may also be used. The particle diameter of the negative electrode active material is appropriately selected in accordance with balance with other components of the battery. In view of improvement in battery properties such as initial efficiency, rate property, and cycle property, the 50% cumulative volume diameter is usually 1 to 50 μm, and preferably 15 to 30 μm.

When the electrode for a secondary battery according to the present invention is used as a positive electrode of a nickel-metal hydride secondary battery, examples of the electrode active material for the positive electrode of the nickel-metal hydride secondary battery (positive electrode active material) may include nickel hydroxide particles. The nickel hydroxide particles may include cobalt, zinc, cadmium, etc. in a solid solution state, or the surface of the nickel hydroxide particles may be coated with an alkaline-heat-treated cobalt compound. Further, the nickel hydroxide particles may include additives such as a cobalt compound such as cobalt oxide, metal cobalt, and cobalt hydroxide, a zinc compound such as metal zinc, zinc oxide, and zinc hydroxide, and a rare earth compound such as erbium oxide, in addition to yttrium oxide.

When the electrode for a secondary battery according to the present invention is used as a negative electrode of the nickel-metal hydride secondary battery, as the electrode active material for the negative electrode of the nickel-metal hydride secondary battery (negative electrode active material), hydrogen-absorbing alloy particles may be those which can absorb hydrogen that is electrochemically generated in an alkaline electrolyte solution during charging of the battery and can easily release the absorbed hydrogen during discharging. The electrode active material for the negative electrode of the nickel-metal hydride secondary battery is not particularly limited, and particles of AB5-type, TiNi-based, and TiFe-based hydrogen-absorbing alloy are preferred. For example, multielemental hydrogen-absorbing alloy particles in which part of Ni in LaNi5, MmNi5 (Mm is misch metal), LmNi5 (Lm is at least one type selected from rare earth elements including La), and alloy thereof is substituted with one or more types of element selected from Al, Mn, Co, Ti, Cu, Zn, Zr, Cr, and B may be used. In particular, hydrogen-absorbing alloy particles having a composition represented by a general formula: $LmNi_wCo_xMn_yAl_z$ (the total value of atomic ratios w, x, y, and z satisfies $4.80 \leq w + x + y + z \leq 5.40$) are suitable since particle size reduction with progress of charge-discharge cycle is suppressed and the charge-discharge cycle lifetime is thereby improved.

[Binding Agent for Electrode Material Layer]

In the present invention, the electrode material layer includes a binding agent (binding agent for an electrode material layer) in addition to the electrode active material. By containing the binding agent, the binding property of the electrode material layer in the electrode is improved, the strength against mechanical force applied during the step of, e.g., winding the electrode is increased, and detachment of the electrode material layer in the electrode is suppressed. Therefore, the risk of short circuit caused by the detached material is reduced.

As the binding agent for an electrode material layer, a variety of resin components may be used. For example, polyethylene, polytetrafluoroethylene (PTFE), polyvinylidene fluoride (PVDF), a tetrafluoroethylene-hexafluoropropylene copolymer (FEP), a polyacrylic acid derivative, a polyacrylonitrile derivative, etc., may be used. As the binding agent, one species thereof may be solely used, or two or more species thereof may be used in combination.

Further, the soft polymer exemplified below may also be used as the binding agent for the electrode material layer.

Examples thereof may include:

an acrylic soft polymer, which is a homopolymer of derivative of acrylic acid or methacrylic acid or a copolymer of the derivative and a monomer copolymerizable therewith, such as polybutyl acrylate, polybutyl methacrylate, polyhydroxyethyl methacrylate, polyacrylamide, polyacrylonitrile, a butyl acrylate-styrene copolymer, a butyl acrylate-acrylonitrile copolymer, and a butyl acrylate-acrylonitrile-glycidyl methacrylate copolymer;

an isobutylene-based soft polymer such as polyisobutylene, isobutylene-isoprene rubber, and an isobutylene-styrene copolymer;

a diene-based soft polymer such as polybutadiene, polyisoprene, a butadiene-styrene random copolymer, an isoprene-styrene random copolymer, an acrylonitrile-butadiene copolymer, an acrylonitrile-butadiene-styrene copolymer, a butadiene-styrene block copolymer, a styrenebutadiene-styrene block copolymer, an isoprene-styrene block copolymer, and a styrene-isoprene-styrene block copolymer;

a silicon-containing soft polymer such as dimethyl polysiloxane, diphenyl polysiloxane, and dihydroxy polysiloxane;

an olefin-based soft polymer such as liquid polyethylene, polyprorylene, poly-1-butene, an ethylene-$\alpha$-olefin copolymer, a propylene-$\alpha$-olefin copolymer, an ethylene-propylene-diene copolymer (EPDM), and an ethylene-propylene-styrene copolymer;

a vinyl-based soft polymer such as polyvinyl alcohol, polyvinyl acetate, polyvinyl stearate, and a vinyl acetate-styrene copolymer;

an epoxy-based soft polymer such as polyethylene oxide, polypropylene oxide, and epichlorohydrin rubber;

a fluorine-containing soft polymer such as vinylidene fluoride rubber and ethylene tetrafluoride-propylene rubber; and

other soft polymers such as natural rubber, polypeptide, protein, a polyester-based thermoplastic elastomer, a vinyl chloride-based thermoplastic elastomer, and a polyamide-based thermoplastic elastomer. These soft polymers may have a crosslinked structure, or may have a functional group introduced by modification.

The amount of the binding agent for an electrode material layer in the electrode material layer is preferably 0.1 to 5 parts by weight, more preferably 0.2 to 4 parts by weight, and particularly preferably 0.5 to 3 parts by weight, based on 100 parts by weight of the electrode active material. When the amount of the binding agent for an electrode material layer in the electrode material layer falls within the aforementioned range, the active material can be prevented from detaching from the electrode without inhibition of a battery reaction.

The binding agent for an electrode material layer is prepared as a solution or a dispersion liquid for producing the electrode. The viscosity at this time is usually within a range of 1 mPa-S to 300,000 mPa·S, and preferably 50 mPa·S to 10,000 mPa·S. The viscosity is a value measured at 25°C and a rotation speed of 60 rpm with a B-type viscometer.

In the present invention, the electrode material layer may include a conductivity-imparting material and a reinforcement material. As the conductivity-imparting material, conductive carbon such as acetylene black, Ketjen black, carbon black, graphite, vapor grown carbon fibers, and carbon nanotube may be used. Further, examples thereof may include carbon powders such as graphite, and fiber and foil of a variety of metals. As the reinforcement material, a variety of inorganic or organic spherical, plate-shaped, rod-shaped, or fibrous fillers may be used. When the conductivity-imparting material is used, electric contact between the electrode active materials can be improved. In particular, when the material is used in the lithium ion secondary battery, the discharge rate property can thereby be improved. The using amounts of the conductivity-imparting material and the reinforcing material are usually 0 to 20 parts by weight, and preferably 1 to 10 parts by weight based on 100 parts by weight of the electrode active material.

The electrode material layer may be formed by attaching a slurry including the binding agent for an electrode material layer, the electrode active material, and the solvent (it may be referred to hereinbelow as "slurry for forming an electrode material layer") to the current collector.

As the medium, a substance in which the binding agent for an electrode material layer can be dissolved or dispersed in the form of particles may be used. A substance in which the binding agent for an electrode material layer is dissolved is preferred as the medium. When a medium in which the binding agent for an electrode material layer can be dissolved is used, absorption of the binding agent for an electrode material layer on the surface of the electrode active material, etc., occurs to thereby stabilize their dispersion.

As the medium of the slurry for forming an electrode material layer, any of water and an organic solvent may be used. Examples of the organic solvent may include alicyclic hydrocarbons such as cyclopentane and cyclohexane; aromatic hydrocarbons such as toluene and xylene; ketones such as ethyl methyl ketone and cyclohexanone; esters such as ethyl acetate, butyl acetate, $\gamma$-butyrolactone, and $\varepsilon$-caprolactone; acylonitriles such as acetonitrile and propionitrile; ethers such as tetrahydrofuran and ethylene glycol diethyl ether; alcohols such as methanol, ethanol, isopropanol, ethylene glycol, and ethylene gylcol monomethyl ether; and amides such as N-methylpyrrolidone and N,N-dimethylformamide. Any one of these media may be solely used or two or more may be used as a mixture, and the medium may be appropriately selected in view of drying speed and environment.

The slurry for forming an electrode material layer may include a thickener. A polymer soluble in the medium for the slurry for forming an electrode material layer is used. As the thickener, the thickener exemplified in the porous membrane according to the present invention may be used. The using amount of the thickener is preferably 0.5 to 1.5 parts by weight based on 100 parts by weight of the electrode active material. When the using amount of the thickener falls within this range, favorable coating property and favorable adhesion to the current collector can be achieved.

In addition to the aforementioned components, trifluoropropylene carbonate, vinylene carbonate, catechol carbonate, 1,6-dioxaspiro[4,4]nonane-2,7-dione, 12-crown-4-ether, etc., may be used in the slurry for forming an electrode material layer for enhancing the stability and lifetime of the battery. Further, these may be used by adding them to the electrolyte solution, which will be described later.

The amount of the medium to be used in the slurry for forming an electrode material layer is adjusted in accordance with the types of the electrode active material and the binding agent for an electrode material layer, so that the slurry has a viscosity suitable for coating. Specifically, the amount of the solvent to be used is adjusted so that the concentration of the solid content is adjusted to preferably 30 to 90% by weight, and more preferably 40 to 80% by weight, wherein the solid content is the total amount of the electrode active material, the binding agent for an electrode material layer, and the optional additives such as a conductivity-imparting material, in the slurry for forming an electrode material layer.

The slurry for forming an electrode material layer is obtained by mixing the electrode active material, the binding agent for an electrode material layer, and the optional additives such as the conductivity-imparting material that are added if necessary, and the medium, using a mixer. In the mixing, the respective components may be supplied together to the mixer and mixed. When the electrode active material, the binding agent for an electrode material layer, the conductivity-imparting material, and the thickener are used as constituent components of the slurry for forming an electrode material layer, it is preferable that the conductivity-imparting material and the thickener are mixed in the medium so that the conductivity-imparting material is dispersed in the form of fine particles, and the binding agent for an electrode material layer and the electrode active material are then added and mixed. When the mixing is performed in this order, the dispersibility of the obtained slurry can be improved. As the mixer, a ball mill, a sand mill, a pigment disperser, a grinding machine, an ultrasonic disperser, a homogenizer, a planetary mixer, a Hobart mixer, etc., may be used. The ball mill is preferably used since aggregation of the conductivity-imparting material and the electrode active material can be suppressed.

The particle size of the slurry for forming an electrode material layer is preferably 35 $\mu$m or smaller, and more preferably 25 $\mu$m or smaller. When the particle size of the slurry falls within the range, a uniform electrode in which the conductive material is well dispersed can be obtained.

The method for producing the electrode material layer may be a method in which the electrode material layer is attached in the form of a layer to at least one surface, and preferably both surfaces, of the current collector. For example, the slurry for forming an electrode material layer is applied onto the current collector, dried, and then heat-treated at 120°C or higher for 1 hour or more to form the electrode material layer. The method for applying the slurry for forming an electrode material layer onto the current collector is not particularly limited. Examples thereof may include a doctor-blade method, a dipping method, a reverse roll method, a direct roll method, a gravure method, an extrusion method, and a brush method. Examples of the drying method may include drying by warm air, hot air, and low humid air, vacuum drying, and drying methods by irradiating (far) infrared radiation, electron beam, etc.

Then, the porosity of the electrode material layer of the electrode is preferably lowered by pressure treatment using metal mold press, roll press, etc. The porosity is preferably within a range of 5% to 15%, and more preferably 7% to 13%. An excessively high porosity deteriorates charge efficiency and discharge efficiency. An excessively low porosity results in problems such as difficulty in obtaining high volume capacity, and the electrode material layer's tendency to be separated to cause a defect. Further, when a curable polymer is used, it is preferable to perform curing.

Both for the positive electrode and the negative electrode, the thickness of the electrode material layer is usually 5 to 300 $\mu$m, and preferably 10 to 250 $\mu$m.

[Separator for Secondary Battery]

The separator for a secondary battery according to the present invention has an organic separator layer and the porous membrane according to the present invention which is layered on the separator layer.

As the organic separator layer, publicly known separators such as those including a polyolefin resin such as polyethylene or polypropylene or an aromatic polyamide resin may be used.

As the organic separator layer for use in the present invention, a porous membrane which does not show electron conductivity but shows ion conductivity, is highly resistant to an organic solvent, and has a fine pore diameter is used. Examples thereof may include a microporous membrane made from a resin such as polyolefin-based resins (for example, polyethylene, polypropylene, polybutene, and polyvinyl chloride), and a mixture or a copolymer thereof, a micropourous film made from a resin such as polyethylene terephthalate, polycycloolefin, polyethersulfone, polyamide, polyimide, polyimideamide, polyaramide, polycycloolefin, nylon, and polytetrafluoroethylene, a woven material or unwoven fabric made of polyolefin fibers, and aggregate of insulating substance particles. Among them, a microporous membrane made of a polyolefin resin is preferable because coating thereon with the slurry for a porous membrane can be performed in an excellent manner, and the thickness of the overall separator can be made thinner, whereby high active material ratio in the battery can be obtained, and thus the capacity per volume is can be increased.

The thickness of the organic separator layer is usually 0.5 to 40 $\mu$m, preferably 1 to 35 $\mu$m, and more preferably 5 to 30 $\mu$m. When the thickness falls within this range, the resistance of the separator in the battery can be kept at a low level, and the workability during coating on the organic separator layer is favorable.

In the present invention, examples of a polyolefin resin used as a material for the organic separator layer may include a homopolymer of polyethylene, polypropylene, etc., copolymer thereof, and a mixture thereof. Examples of polyethylene may include low-density, middle-density, and high-density polyethylenes. In view of picking strength and mechanical strength, a high density polyethylene is preferable. Further, for imparting flexibility, two or more types of polyethylene may be mixed. The polymerization catalyst used for the polyethylene is not particularly limited, and examples thereof may include Ziegler-Natta catalyst, Phillips catalyst, and Metallocene catalyst. In order to achieve both mechanical strength and high permeability, the viscosity average molecular weight of polyethylene is preferably 100,000 or more and 12,000,000 or less, and more preferably 200,000 or more and 3,000,000 or less. Examples of polypropylene may include a homopolymer, a random copolymer, and a block copolymer. One species thereof may be solely used, or two or more species thereof may be used as a mixture. The polymerization catalyst is not particularly limited, and examples thereof may include Ziegler-Natta catalyst and Metallocene catalyst. Stereoregularity thereof is not particularly limited. It is possible to use isotactic, syndiotactic and atactic ones. In view of inexpensive cost, isotactic polypropylene is desirably used. Further, within a range not impairing the effects of the present invention, an appropriate amount of additive such as polyolefin other than polyethylene and polypropylene, an antioxidant and a nucleating agent may be added to polyolefin.

As the method for preparing a polyolefin-based organic separator layer, publicly known and used methods are used. Examples of the method to be selected may include a dry method wherein a film is formed by melt extrusion of polypropylene or polyethylene, and the resulting film is annealed at a low temperature to form a crystal domain therein, and then stretched while keeping this state, to extend an amorphous domain, thus forming a microporous membrane; and a wet method wherein a hydrocarbon solvent, other low molecular materials, and polypropylene or polyethylene are mixed to form a film, and then, from the film in which the solvent and the low molecular materials are aggregated and an island phase begins to appear in an amorphous phase, the solvent and the low molecular materials are removed by using a more highly volatile solvent, to form a microporous membrane. In particular, the dry method is preferable since thereby a large pore space can be easily obtained to reduce the resistance.

The organic separator layer for use in the present invention may include any fillers and fibrous compounds for controlling strength, hardness, and thermal contraction ratio. Further, for improving adhesion and decreasing the surface tension with respect to the electrolyte solution to improve impregnation of the solution during formation of the porous membrane, coating treatment with a low molecular compound or a polymer compound, treatment with electromagnetic radiation such as ultraviolet radiation, or plasma treatment by corona discharge or plasma gas may be previously performed. In particular, coating treatment with a polymer compound containing a polar group such as a carboxylic acid group, a hydroxyl group, and a sulfonic acid group is preferable since thereby high impregnation with an electrolyte solution and adhesion to the porous membrane can be easily achieved.

The separator according to the present invention may have the porous membrane only on one surface of the organic separator layer or on both surfaces thereof.

[Secondary Battery]

The secondary battery according to the present invention is a secondary battery including a positive electrode, a negative electrode, a separator, and an electrolyte solution, wherein at least any one of the positive electrode, the negative electrode, and the separator has the porous membrane according to the present invention.

Examples of the secondary battery may include a lithium ion secondary battery and a nickel-metal hydride secondary battery. A lithium ion secondary battery is preferable since improvement in safety is the most strongly required and the effect of introducing the porous membrane is highest, and further improvement in rate property is its problem to be solved. The following description will be made regarding a case of use in the lithium ion secondary battery.

[Electrolyte Solution]

As the electrolyte solution for the lithium ion secondary battery, an organic electrolyte solution containing an organic solvent and a supporting electrolyte dissolved therein is used. As the supporting electrolyte, a lithium salt is used. The lithium salt is not particularly limited, and examples thereof may include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Among them, $LiPF_6$, $LiClO_4$, and $CF_3SO_3Li$ which are easily soluble to a solvent and show a high dissociation degree are preferred. They may be used in combination of two or more species thereof. Use of a supporting electrolyte having a higher dissociation degree gives higher lithium ion conductivity. Therefore, the lithium ion conductivity can be controlled by selecting the type of supporting electrolyte.

The organic solvent for use in an electrolyte solution for a lithium ion secondary battery is not particularly limited as long as the supporting electrolyte can be dissolved therein. Those which can be suitably used may include carbonates such as dimethyl carbonate (DMC), ethylene carbonate (EC), diethyl carbonate (DEC), propylene carbonate (PC), butylene carbonate (BC), and methylethyl carbonate (MEC); esters such as $\gamma$-butyrolactone and methyl formate; ethers such as 1,2-dimethoxyethane and tetrahydrofuran; and sulfur-containing compounds such as sulfolane and dimethyl sulfoxide. Further, a mixture liquid of these solvents may also be used. In particular, carbonates are preferable since they have a high dielectric constant and they are stable in a wide potential region. Use of a solvent having lower viscosity gives higher lithium ion conductivity. Therefore, the lithium ion conductivity can be controlled by selecting the type of the solvent.

The concentration of the supporting electrolyte in the electrolyte solution for a lithium ion secondary battery is usually 1 to 30% by weight, and preferably 5% by weight to 20% by weight. Further, the supporting electrolyte is usually used in a concentration of 0.5 to 2.5 mol/L depending on the type of the supporting electrolyte. When the concentration of the supporting electrolyte is too low or too high, the ion conductivity tends to be decreased. Use of a electrolyte solution having lower concentration gives larger swelling degree of polymer particles. Therefore, the lithium ion conductivity can be controlled by controlling the concentration of the electrolyte solution.

[Separator and Electrode]

As the separator, the separator having a porous membrane according to the present invention may be used, and in addition, a separator other than that may also be used. For example, the organic separator layer exemplified above may be used as it is as the separator.

As the positive electrode and the negative electrode, the electrode for a secondary battery according to the present invention which has the porous membrane may be used, and in addition, an electrode other than that may also be used. For example, a layered body including the current collector and the electrode material layer attached to the current collector as described above may be used as it is as the electrode.

However, in the secondary battery according to the present invention, at least any one of the positive electrode, the negative electrode, and the separator has the porous membrane.

Specific examples of the method for producing the lithium ion secondary battery may include a method wherein the positive electrode and the negative electrode are stacked with the separator interposed therebetween, the stacked layers are then wound or folded in accordance with a battery shape and then put into a battery container, then the electrolyte solution is poured into the battery container, and the battery container is sealed. The porous membrane according to the present invention is formed on any of the positive electrode, the negative electrode, and the separator. Further, the porous membrane itself may be independently layered. If necessary, it is possible to incorporate thereinto expand metal, fuse, an over-current protective element such as a PTC element, a lead plate, etc., to prevent an increase of pressure inside the battery and over-charging and over-discharging, etc. The shape of the battery may be any of a coin type, a button type, a sheet type, a cylindrical type, a rectangular type, a flat type, etc.

Examples

The present invention will be more specifically described hereinbelow with reference of Examples, but the present invention is not limited thereto. In the description with respect to the quantity ratio of substances in Examples, "%" and "part(s)" represent ratios by weight unless otherwise specified.

In Examples and Comparative Examples, properties were evaluated as follows.

(Number Average Particle Diameter of Non-Conductive Particles)

A laser diffraction scattering particle size distribution measuring device (LS230: manufactured by Beckmann Coulter, Inc.) was used for measurement. The number average particle diameter used herein represents a particle diameter at which a cumulative distribution value is 50% in the particle diameter-number cumulative distribution.

(Measurement of Specific Surface Area (SB) of Non-Conductive Particles)

A full automatic BET specific surface area measurement device (product name "Macsorb HM model-1208" manufactured by MOUNTECH CO., Ltd.) was used for measurement in accordance with a gas absorption method.

(Measurement of Specific Gravity of Non-Conductive Particles)

A dry automatic densitometer (product name "Accupyc 1330-01", manufactured by Shimadzu Corporation) was used for measurement.

(Calculation of Theoretical Specific Surface Area (SD) of Non-Conductive Particles)

The theoretical specific surface area was calculated from a value r that is a half of the measured number average particle diameter (i.e., radius) and the measured specific gravity G using an expression: SD = 3/rG.

(Arithmetic Average of Shape Factor of Non-Conductive Particles)

A magnified image of the non-conductive particles at 50,000 times was photographed by a field emission scanning electron microscope (Hitachi S-4700: manufactured by Hitachi High-Technologies Corporation). The image was subjected to photograph image analysis using an image analysis software (analySIS Pro: manufactured by Olympus Corporation) to determine the arithmetic average of the shape factor. At this time, the noise of the image was removed, 100 non-conductive particles was arbitrarily selected, and the shapes thereof were observed. The shape factor was calculated using the following expression (A).

$$\text{Shape factor} = (\text{maximum diameter}/2)^2 \times \pi) \text{ / projected area} \quad \text{expression (A)}$$

In the expression, the maximum diameter means the particle width which is the maximum distance between two parallel lines sandwiching an image of the non-conductive particle projected onto a plane. The projected area means the area of the projection image of the non-conductive particle projected onto a plane surface.

(Measurement of Containing Amount of Metal Ion in Non-Conductive Particles)

The metal ions in the non-conductive particles was quantitatively analyzed by an inductively coupled plasma emission spectrophotometer ICP-AES (SPS-5100: manufactured by SII NanoTechnology Inc.).
The non-conductive particles were incinerated in an electric furnace at 550°C, and dissolved in an aqueous nitric acid solution, and alumina was dissolved in aqua regia, for measurement.
Target metal ions to be quantitatively analyzed were Ca, Co, Cr, Cu, Fe, Mg, Ni, and Zn, which may affect the battery performance. The total amount of the ions was used as the containing amount of the metal ions in the non-conductive particles. The resulting containing amount of the metal ions was evaluated in accordance with the following criteria.
(Evaluation Criteria)
Good: less than 50 ppm
Poor: 50 ppm or more

(Powder Falling Property of Electrode with Porous Membrane or of Separator with Porous Membrane)

An electrode with a porous membrane or a separator with a porous membrane was punched into a disc shape with a diameter of 19 mm by an electrode punching machine. The presence or absence of porous membrane pieces attached to a punching blade was visually observed, and judged in accordance with the following criteria. Later occurrence of the porous membrane piece attachment to the punching blade is indicative of better powder falling property of the porous membrane layer formed on an electrode material layer or on an organic separator layer. An examination of the presence or absence of attached porous membrane pieces was performed every 100 times of punching, and examinations were performed up to 1,000 times of punching.

(Evaluation Criteria)

A: attaching of porous membrane pieces did not appear even after 1,000 times of punching
B: attaching of porous membrane pieces appeared after 501 to 999 times of punching
C: attaching of porous membrane pieces appeared after 101 to 500 times of punching
D: attaching of porous membrane pieces appeared after 100 or less times of punching

(Moisture amount of Electrode with Porous Membrane or of Separator with Porous Membrane)

The electrode or the separator was cut into 10 cm in width and 10 cm in length, to produce a test piece. The test piece was allowed to stand in a dry room (temperature: 25°C, dew point: -60°C or lower) for 3 hours. After that, the moisture amount of the test piece was measured by a coulometric moisture titrator with a moisture vaporization method (vaporization temperature: 150°C). The moisture amount per unit volume of a porous membrane was calculated, and evaluated in accordance with the following criteria.
(Evaluation Criteria)
Good: less than 1,000 ppm
Poor: 1,000 ppm or more

(Cycle Property)

10 coin-type battery cells were charged to 4.3 V by a 0.2 C constant current method and discharged to 3.0 V, and the charging and discharging processes were repeated. The electric capacity was then measured. An average of electric capacities of 10 cells was considered as the measurement value, and the charge and discharge capacity retention ratio represented by a ratio (%) of electric capacity after 60 cycles and the electric capacity after 5 cycles was calculated. The cycle property was then evaluated in accordance with the following criteria. Higher value of this measurement is indicative of better cycle property.
(Evaluation Criteria)
A: 80% or more
B: 70% or more to less than 80%
C: 60% or more to less than 70%
D: less than 60%

(Local Heating Test of Separator with Porous Membrane)

The separator with a porous membrane was cut into 2 cm in width and 2 cm in length, to produce a test piece. This test piece was placed on a center of a fluoro rubber sheet of 3 cm in width, 3 cm in length, and 2 mm in thickness, and fixed at both ends thereof by a tape. This sample was fixed on a level stand with the separator-attaching side facing upward. Subsequently, a local heating tester (manufactured by TAIYO ELECTRIC IND. CO., LTD.; body: RX-802AS, soldering iron tip: RX-80HRT-0.5C) was set to 250°C. The soldering iron tip was passed through the separator at a speed of 10 mm/sec. When the tip was passed through the separator by 2 mm in length of the tip, the tip was held for 10 seconds, and extracted at a speed of 10 mm/sec. The diameter of the through-hole formed in the separator was measured by a digital microscope (manufactured by KEYENCE CORPORATION; digital microscope VHX-500F). This test was performed 10 times, and the obtained average was defined as the diameter of the through-hole. The diameter was evaluated in accordance with the following criteria. Smaller value of this measurement is indicative of better heat resistance.
(Evaluation Criteria)
A: less than 0.40 $\mu$m
B: 0.40 $\mu$m or more to less than 0.45 $\mu$m
C: 0.45 $\mu$m or more to less than 0.50 $\mu$m
D: 0.50 $\mu$m or more to less than 0.60 $\mu$m
E: 0.60 $\mu$m or more

(Reliability Test of Separator with Porous Membrane)

The separator with a porous membrane was punched into a disc shape with a diameter of 19 mm, and the punched piece was immersed in a solution of 3% by weight of nonionic surfactant (available from Kao Corporation; EMULGEN 210P) in methanol, and then air-dried. The disc-shaped separator was impregnated with an electrolyte solution, and sandwiched between a pair of SUS plate (diameter: 15.5 mm) to form stacked layers of (SUS plate) / (disc-shaped separator) / (SUS plate). As the electrolyte solution, a solution in which $LiPF_6$ was dissolved at a concentration of 1 mol/L in a mixed solvent of ethylene carbonate (EC) and diethyl carbonate (DEC) at a ratio of EC:DEC=1:2 (a volume ratio at 20°C) was used. The stacked layers were sealed in a 2032-type coin cell. Lead wires were drawn from the coin cell, and attached to a thermocouple. The coin cell was placed in an oven. The temperature was raised to 200°C at a temperature increasing rate of 1.6°C/min while an alternate current having an amplitude of 10 mV and a frequency of 1 kHz was applied. During this period, occurrence state of short circuit was checked by measuring cell resistance. This test was performed 10 times, and the separator was evaluated in accordance with the following criteria.
(Evaluation Criteria)
Good: short circuit did not occur
Poor: short circuit occurred

(Reliability Test of Electrode with Porous Membrane)

A separator (a single layer polyethylene separator produced by a wet method, thickness: 16 $\mu$m, which is the same as that used as "organic separator layer" in Example 1) was punched into a disc shape with a diameter of 19 mm, and the punched piece was immersed in a solution of 3% by weight of nonionic surfactant (available from Kao Corporation; EMULGEN 210P) in methanol, and then air-dried. Meanwhile, an electrode to be measured was punched into a disc shape with a diameter of 19 mm. The separator and the electrode were impregnated with an electrolyte solution, layered, and sandwiched between a pair of SUS plate (diameter: 15.5 mm) to form stacked layers of (SUS plate) / (disc-shaped separator) / (disc-shaped electrode) / (SUS plate). The disc-shaped electrode was placed so that the surface on which the porous membrane was formed was on the side of the separator. As the electrolyte solution, a solution in which $LiPF_6$ was dissolved at a concentration of 1 mol/L in a mixed solvent of ethylene carbonate (EC) and diethyl carbonate (DEC) at a ratio of EC:DEC=1:2 (a volume ratio at 20°C) was used. The stacked layers were sealed in a 2032-type coin cell. Lead wires were drawn from the coin cell, and attached to a thermocouple. The coin cell was placed in an oven. The temperature was raised to 200°C at a temperature increasing rate of 1.6°C/min while an alternate current having an amplitude of 10 mV and a frequency of 1 kHz was applied. During this period, occurrence state of short circuit was checked by measuring cell resistance. This test was performed 10 times, and the electrode was evaluated in accordance with the following criteria.
(Evaluation Criteria)
Good: no short circuit occurred
Poor: short circuit occurred

<Example 1>

(1-1. Production of Seed Polymer Particles A)

0.06 parts of sodium dodecylsulfate, 0.23 parts of ammonium persulfate, and 100 parts of ion exchanged water were placed in a reactor equipped with a stirrer, and mixed to prepare a mixture A. The temperature was raised to 80°C.
Meanwhile, in another reactor, 93.8 parts of butyl acrylate, 2.0 parts of methacrylic acid, 2.0 parts of acrylonitrile, 1.0 part of allyl glycidyl ether, 1.2 parts of N-methylol acrylamide, 0.1 parts of sodium dodecylsulfate, and 100 parts of ion exchanged water were mixed to prepare a dispersion of a monomer mixture 1.
This dispersion of the monomer mixture 1 was continuously added to the mixture A obtained above over 4 hours, for polymerization. The temperature in a reaction system during continuous addition of the dispersion of the monomer mixture 1 was maintained to 80°C, to perform the reaction. After completion of the continuous addition, the reaction was continued at 90°C for 3 hours.
As a result, an aqueous dispersion of seed polymer particles A with an average particle diameter of 370 nm was obtained.

(1-2. Production of Non-Conductive Particles A)

Subsequently, 20 parts based on a solid content (i.e., based on the weight of the seed polymer particles A) of the aqueous dispersion of seed polymer particles A obtained in the process (1-1), 100 parts of ethylene glycol dimethacrylate (available from KYOEISHA CHEMICAL CO., LTD., trade name: LIGHT ESTER EG) as a monomer, 1.0 part of sodium dodecylbenzenesulfonate, 4.0 parts of t-butylperoxy-2-ethyl hexanoate (available from NOF Corporation, trade name: PERBUTYL O) as a polymerization initiator, and 200 parts of ion exchanged water were placed in a reactor equipped with a stirrer, and stirred at 35°C for 12 hours. As a result, the monomer and the polymerization initiator were completely absorbed by the seed polymer particles A. The resultant was then polymerized at 90°C for 5 hours. After that, steam was introduced to remove an unreacted monomer and a degradation product of the initiator.
As a result, an aqueous dispersion of non-conductive particles A with an average particle diameter of 670 nm was obtained.
The number average particle diameter, specific surface area, arithmetic average of shape factor, and metal ion amount of the obtained non-conductive particles were measured. The results are shown in Table 1.

(1-3. Production of Binder for Porous Membrane)

0.06 parts of sodium dodecylsulfate, 0.23 parts of ammonium persulfate, and 100 parts of ion exchanged water were placed in a reactor equipped with a stirrer, and mixed to prepare a mixture A. The temperature was raised to 80°C.
Meanwhile, in another reactor, 83.8 parts of butyl acrylate, 2.0 parts of methacrylic acid, 12.0 parts of acrylonitrile, 1.0 part of allyl glycidyl ether, 1.2 parts of N-methylol acrylamide, 0.1 parts of sodium dodecylsulfate, and 100 parts of ion exchanged water were mixed to prepare a dispersion of a monomer mixture 1.

This dispersion of the monomer mixture 1 was continuously added to the mixture A obtained above over 4 hours, for polymerization. The temperature in a reaction system during continuous addition of the dispersion of the monomer mixture 1 was maintained to 80°C, to perform the reaction. After completion of the continuous addition, the reaction was continued at 90°C for 3 hours. Thus, an aqueous dispersion of a binder was obtained.

The obtained aqueous dispersion of the binder was cooled to 25°C. To this dispersion, ammonia water was added to adjust the pH to 7. After that, steam was introduced to remove an unreacted monomer. The solid content concentration was adjusted by ion exchanged water, and simultaneously, the resultant was filtered through a 200-mesh stainless wire net (opening: about 77 $\mu$m) to obtain an aqueous dispersion of a binder for a porous membrane having an average particle diameter of 370 nm and a solid content concentration of 40%.

(1-4. Production of Slurry for Porous Membrane)

The aqueous dispersion of the non-conductive particles A obtained in the process (1-2), the aqueous dispersion of the binder for a porous membrane obtained in the process (1-3), carboxymethyl cellulose (available from Daicel Corporation, trade name: DAICEL1220), and a wetting agent (available from SAN NOPCO LIMITED, trade name: SN-WET 980) were mixed in water so that the solid content weight ratio was 82:12:5:1, to obtain a slurry for a porous membrane having a solid content concentration of 20%.

(1-5. Production of Separator with Porous Membrane)

A single layer polyethylene separator (thickness: 16 $\mu$m) produced by the wet method was prepared as an organic separator layer. The slurry for a porous membrane obtained in the process (1-4) was applied onto one surface of the organic separator layer so that the thickness of dried slurry was 5 $\mu$m, to obtain a slurry layer. The slurry layer was dried at 50°C for 10 minutes to form a porous membrane. Subsequently, the porous membrane was similarly formed on another surface of the organic separator layer to obtain a separator having a porous membrane on both surfaces.

(1-6. Production of Positive Electrode)

To 95 parts of LiCoO$_2$ as a positive electrode active material, polyvinylidene fluoride (PVDF, available from KUREHA CORPORATION, trade name: KF-1100) as a binder was added so that the solid content amount was 3 parts, and 2 parts of acetylene black and 20 parts of N-methyl pyrrolidone were further added. The mixture was mixed by a planetary mixer to obtain an electrode composition for a positive electrode in the form of slurry. The positive electrode composition was applied onto one surface of an aluminum foil having a thickness of 18 $\mu$m, dried at 120°C for 3 hours, and pressed with a roller to obtain a positive electrode having a positive electrode material layer with a total thickness of 100 $\mu$m.

(1-7. Production of Negative Electrode)

98 parts of graphite having a particle diameter of 20 $\mu$m and a specific surface area of 4.2 m$^2$/g as a negative electrode active material and 1 part in terms of solid content of SBR (styrene-butadiene rubber, glass transition temperature: -10°C) as a binder were mixed, and 1.0 part of carboxymethyl cellulose was added to the mixture. The mixture was mixed by a planetary mixer to prepare an electrode composition for a negative electrode in a form of slurry. The negative electrode composition was applied onto one surface of a copper foil having a thickness of 18 $\mu$m, dried at 120°C for 3 hours, and pressed with a roller to obtain a negative electrode having a negative electrode material layer with a total thickness of 100 $\mu$m.

(1-8. Production of Secondary Battery Having Separator with Porous Membrane)

The positive electrode obtained in the process (1-6) was cut into a disc shape with a diameter of 13 mm to obtain a disc-shaped positive electrode. The negative electrode obtained in the process (1-7) was cut into a disc shape with a diameter of 14 mm to obtain a disc-shaped negative electrode. The separator with a porous membrane obtained in the process (1-5) was cut into a disc shape with a diameter of 18 mm to obtain a disc-shaped separator with a porous membrane.

The disc-shaped positive electrode was disposed on an inner bottom surface of a coin-type outer container made of stainless steel in which a polypropylene packing was installed. The disc-shaped separator with a porous membrane was disposed on the positive electrode, and the disc-shaped negative electrode was disposed on the separator. These were placed in the container. The disc-shaped positive electrode was placed so that a surface on the aluminum foil side was oriented toward the bottom surface side of the outer container and a surface on the positive electrode material layer side was oriented upward. The disc-shaped negative electrode was placed so that the surface on the negative electrode material layer side was oriented toward the side of the separator with a porous membrane and the surface on the copper foil side was oriented upward.

An electrolyte solution was injected into the container without residual air. A cap made of stainless steel having a thickness of 0.2 mm was placed and fixed on the outer container via a polypropylene packing, to seal the battery case. Thus, a lithium ion secondary battery having a diameter of 20 mm and a thickness of about 3.2 mm (coin cell CR2032) was produced. As the electrolyte solution, a solution in which $LiPF_6$ was dissolved at a concentration of 1 mol/L in a mixed solvent of ethylene carbonate (EC) and diethyl carbonate (DEC) at a ratio of EC:DEC=1:2 (a volume ratio at 20°C) was used.

(1-9. Evaluation)

The moisture amount, powder falling property, and reliability (ability to prevent short circuit at high-temperature) of the obtained separator with a porous membrane were evaluated. The cycle property of the obtained secondary battery was also evaluated. The results are shown in Table 1.

<Example 2>

(2-1. Production of Seed Polymer Particles B)

0.06 parts of sodium dodecylsulfate, 0.23 parts of ammonium persulfate, and 100 parts of ion exchanged water were placed in a reactor equipped with a stirrer, and mixed to prepare a mixture B. The temperature was raised to 80°C.
Meanwhile, in another reactor, 93.8 parts of butyl acrylate, 2.0 parts of methacrylic acid, 2.0 parts of acrylonitrile, 1.0 part of allyl glycidyl ether, 1.2 parts of N-methylol acrylamide, 0.1 parts of sodium dodecylsulfate, 2.0 parts of t-dodecyl mercaptan, and 100 parts of ion exchanged water were mixed to prepare a dispersion of a monomer mixture 2.
This dispersion of the monomer mixture 2 was continuously added to the mixture B obtained above over 4 hours, for polymerization. The temperature in a reaction system of continuous addition of the dispersion of monomer mixture 2 was maintained to 80°C, to perform the reaction. After completion of the continuous addition, the reaction was continued at 90°C for 3 hours.
As a result, an aqueous dispersion of seed polymer particles B with an average particle diameter of 370 nm was obtained.

(2-2. Production of Non-Conductive Particles B)

Non-conductive particles B were obtained in the same manner as in the process (1-2) of Example 1 except that the seed polymer particles B obtained in the process (2-1) were used in place of the seed polymer particles A.

(2-3. Production and Evaluation of Secondary Battery, etc.)

A separator with a porous membrane and a secondary battery were produced by the same operations as those in the processes (1-3) to (1-9) of Example 1 except that the aqueous dispersion of the non-conductive particles B obtained in the process (2-2) was used in place of the aqueous dispersion of the non-conductive particles A obtained in the process (1-2) in the production of slurry for a porous membrane of the process (1-4). The obtained secondary battery and other materials (material obtained in the production of the secondary battery, such as non-conductive particles and separator with a porous membrane) were evaluated in the same manner as in Example 1. The results are shown in Table 1.

<Example 3>

(3-1. Production of Non-Conductive Particles C)

20 parts based on a solid content (i.e., based on the weight of the seed polymer particles A) of the aqueous dispersion of the seed polymer particles A obtained in the process (1-1) of Example 1, 100 parts of ethylene glycol dimethacrylate (available from KYOEISHA CHEMICAL CO., LTD., trade name: LIGHT ESTER EG) as a monomer, 1.0 part of sodium dodecylbenzenesulfonate, 4.0 parts of t-butylperoxy-2-ethyl hexanoate (available from NOF Corporation, trade name: PERBUTYL O) as a polymerization initiator, 50 parts of cyclohexanol, and 200 parts of ion exchanged water were placed in a reactor equipped with a stirrer, and stirred at 35°C for 12 hours. As a result, the monomer and the polymerization initiator were completely absorbed by the seed polymer particles A. The resultant was then polymerized at 90°C for 5 hours. After that, steam was introduced to remove a non-reactive solvent, an unreacted monomer, and a degradation product of the initiator.

As a result, an aqueous dispersion of non-conductive particles C with an average particle diameter of 665 nm was obtained.

(3-2. Production and Evaluation of Secondary Battery, etc.)

A separator with a porous membrane and a secondary battery were produced by the same operations as those in the processes (1-3) to (1-9) of Example 1 except that an aqueous dispersion of the non-conductive particles C obtained in the process (3-1) was used in place of the aqueous dispersion of the non-conductive particles A obtained in the process (1-2) in the production of slurry for a porous membrane of the process (1-4). The obtained secondary battery and other materials were evaluated in the same manner as in Example 1. The results are shown in Table 1.

<Example 4>

(4-1. Production of Non-Conductive Particles D)

20 parts based on a solid content (i.e., based on the weight of the seed polymer particles A) of the aqueous dispersion of the seed polymer particles A obtained in the process (1-1) of Example 1, 86 parts of ethylene glycol dimethacrylate (available from KYOEISHA CHEMICAL CO., LTD., trade name: LIGHT ESTER EG) as a monomer, 14 parts of styrene as a monomer, 1.0 part of sodium dodecylbenzenesulfonate, 4.0 parts of t-butylperoxy-2-ethyl hexanoate (available from NOF Corporation, trade name: PERBUTYL O) as a polymerization initiator, and 200 parts of ion exchanged water were placed in a reactor equipped with a stirrer, and stirred at 35°C for 12 hours. As a result, the monomers and the polymerization initiator were completely absorbed by the seed polymer particles A. The resultant was then polymerized at 90°C for 5 hours. After that, steam was introduced to remove an unreacted monomer and a degradation product of the initiator.

As a result, an aqueous dispersion of non-conductive particles D with an average particle diameter of 675 nm was obtained.

(4-2. Production and Evaluation of Secondary Battery, etc.)

A separator with a porous membrane and a secondary battery were produced by the same operations as those in the processes (1-3) to (1-9) of Example 1 except that the aqueous dispersion of the non-conductive particles D obtained in the process (4-1) was used in place of the aqueous dispersion of the non-conductive particles A obtained in the process (1-2) in the production of slurry for a porous membrane of the process (1-4). The obtained secondary battery and other materials were evaluated in the same manner as in Example 1. The results are shown in Table 1.

<Example 5>

(5-1. Production of Non-Conductive Particles E)

3 parts based on a solid content (i.e., based on the weight of the seed polymer particles A) of the aqueous dispersion of the seed polymer particles A obtained in the process (1-1) of Example 1, 100 parts of ethylene glycol dimethacrylate (available from KYOEISHA CHEMICAL CO., LTD., trade name: LIGHT ESTER EG) as a monomer, 1.0 part of sodium dodecylbenzenesulfonate, 4.0 parts of t-butylperoxy-2-ethyl hexanoate (available from NOF Corporation, trade name: PERBUTYL O) as a polymerization initiator, and 200 parts of ion exchanged water were placed in a reactor equipped with a stirrer, and stirred at 35°C for 12 hours. As a result, the monomer and the polymerization initiator were completely absorbed by the seed polymer particles A. The resultant was then polymerized at 90°C for 5 hours. After that, steam was introduced to remove an unreacted monomer and a degradation product of the initiator.

As a result, an aqueous dispersion of non-conductive particles E with an average particle diameter of 670 nm was obtained.

(5-2. Production and Evaluation of Secondary Battery, etc.)

A separator with a porous membrane and a secondary battery were produced by the same operations as those in the processes (1-3) to (1-9) of Example 1 except that the aqueous dispersion of the non-conductive particles E obtained in the process (5-1) was used in place of the aqueous dispersion of the non-conductive particles A obtained in the process (1-2) in the production of slurry for a porous membrane of the process (1-4). The obtained secondary battery and other materials were evaluated in the same manner as in Example 1. The results are shown in Table 1.

<Example 6>

(6-1. Production of Non-Conductive Particles F)

20 parts based on a solid content (i.e., based on the weight of the seed polymer particles A) of the aqueous dispersion of the seed polymer particles A obtained in the process (1-1) of Example 1, 100 parts of ethylene glycol dimethacrylate (available from KYOEISHA CHEMICAL CO., LTD., trade name: LIGHT ESTER EG) as a monomer, 1.0 part of sodium dodecylbenzenesulfonate, 4.0 parts of t-butylperoxy-2-ethyl hexanoate (available from NOF Corporation, trade name: PERBUTYL O) as a polymerization initiator, 50 parts of toluene, and 200 parts of ion exchanged water were placed in a reactor equipped with a stirrer, and stirred at 35°C for 12 hours. As a result, the monomer and the polymerization initiator were completely absorbed by the seed polymer particles A. The resultant was then polymerized at 90°C for 5 hours. After that, steam was introduced to remove a non-reactive solvent, an unreacted monomer, and a degradation product of the initiator.
As a result, an aqueous dispersion of non-conductive particles F with an average particle diameter of 677 nm was obtained.

(6-2. Production and Evaluation of Secondary Battery, etc.)

A separator with a porous membrane and a secondary battery were produced by the same operations as those in the processes (1-3) to (1-9) of Example 1 except that the aqueous dispersion of the non-conductive particles F obtained in the process (6-1) was used in place of the aqueous dispersion of the non-conductive particles A obtained in the process (1-2) in the production of slurry for a porous membrane of the process (1-4). The obtained secondary battery and other materials were evaluated in the same manner as in Example 1. The results are shown in Table 1.

<Example 7>

(7-1. Production of Non-Conductive Particles G)

20 parts based on a solid content (i.e., based on the weight of the seed polymer particles A) of the aqueous dispersion of the seed polymer particles A obtained in the process (1-1) of Example 1, 100 parts of ethylene glycol dimethacrylate (available from KYOEISHA CHEMICAL CO., LTD., trade name: LIGHT ESTER EG) as a monomer, 1.0 part of sodium dodecylbenzenesulfonate, 4.0 parts of t-butylperoxy-2-ethyl hexanoate (available from NOF Corporation, trade name: PERBUTYL O) as a polymerization initiator, 100 parts of toluene, and 200 parts of ion exchanged water were placed in a reactor equipped with a stirrer, and stirred at 35°C for 12 hours. As a result, the monomer and the polymerization initiator were completely absorbed by the seed polymer particles A. The resultant was then polymerized at 90°C for 5 hours. After that, steam was introduced to remove a non-reactive solvent, an unreacted monomer, and a degradation product of the initiator.
As a result, an aqueous dispersion of non-conductive particles G with an average particle diameter of 680 nm was obtained.

(7-2. Production and Evaluation of Secondary Battery, etc.)

A separator with a porous membrane and a secondary battery were produced by the same operations as those in the processes (1-3) to (1-9) of Example 1 except that the aqueous dispersion of the non-conductive particles G obtained in the process (7-1) was used in place of the aqueous dispersion of the non-conductive particles A obtained in the process (1-2) in the production of slurry for a porous membrane of the process (1-4). The obtained secondary battery and other materials were evaluated in the same manner as in Example 1. The results are shown in Table 1.

<Example 8>

(8-1. Production of Non-Conductive Particles H)

20 parts based on a solid content (i.e., based on the weight of the seed polymer particles A) of the aqueous dispersion of the seed polymer particles A obtained in the process (1-1) of Example 1, 100 parts of ethylene glycol dimethacrylate (available from KYOEISHA CHEMICAL CO., LTD., trade name: LIGHT ESTER EG) as a monomer, 1.0 part of sodium dodecylbenzenesulfonate, 4.0 parts of t-butylperoxy-2-ethyl hexanoate (available from NOF Corporation, trade name: PERBUTYL O) as a polymerization initiator, 100 parts of cyclohexanol, and 200 parts of ion exchanged water were placed in a reactor equipped with a stirrer, and stirred at 35°C for 12 hours. As a result, the monomer and the polymerization initiator were completely absorbed by the seed polymer particles A. The resultant was then polymerized at 90°C for 5 hours. After that, steam was introduced to remove a non-reactive solvent, an unreacted monomer, and a degradation product of the initiator.

As a result, an aqueous dispersion of non-conductive particles H with an average particle diameter of 655 nm was obtained.

(8-2. Production and Evaluation of Secondary Battery, etc.).

A separator with a porous membrane and a secondary battery were produced by the same operations as those in the processes (1-3) to (1-9) of Example 1 except that the aqueous dispersion of the non-conductive particles H obtained in the process (8-1) was used in place of the aqueous dispersion of the non-conductive particles A obtained in the process (1-2) in the production of slurry for a porous membrane of the process (1-4). The obtained secondary battery and other materials were evaluated in the same manner as in Example 1. The results are shown in Table 2.

<Example 9>

(9-1. Production of Non-Conductive Particles I)

20 parts based on a solid content (i.e., based on the weight of the seed polymer particles A) of the aqueous dispersion of the seed polymer particles A obtained in the process (1-1) of Example 1, 60 parts of ethylene glycol dimethacrylate (available from KYOEISHA CHEMICAL CO., LTD., trade name: LIGHT ESTER EG) as a monomer, 40 parts of styrene as a monomer, 1.0 part of sodium dodecylbenzenesulfonate, 4.0 parts of t-butylperoxy-2-ethyl hexanoate (available from NOF Corporation, trade name: PERBUTYL O) as a polymerization initiator, and 200 parts of ion exchanged water were placed in a reactor equipped with a stirrer, and stirred at 35°C for 12 hours. As a result, the monomers and the polymerization initiator were completely absorbed by the seed polymer particles A. The resultant was then polymerized at 90°C for 5 hours. After that, steam was introduced to remove an unreacted monomer and a degradation product of the initiator.

As a result, an aqueous dispersion of non-conductive particles I with an average particle diameter of 666 nm was obtained.

(9-2. Production and Evaluation of Secondary Battery, etc.)

A separator with a porous membrane and a secondary battery were produced by the same operations as those in the processes (1-3) to (1-9) of Example 1 except that the aqueous dispersion of the non-conductive particles I obtained in the process (9-1) was used in place of the aqueous dispersion of the non-conductive particles A obtained in the process (1-2) in the production of slurry for a porous membrane of the process (1-4). The obtained secondary battery and other materials were evaluated in the same manner as in Example 1. The results are shown in Table 2.

<Example 10>

(10-1. Production of Non-Conductive Particles J)

20 parts based on a solid content (i.e., based on the weight of the seed polymer particles A) of the aqueous dispersion of the seed polymer particles A obtained in the process (1-1) of Example 1, 100 parts of trimethylol propane triacrylate (available from Osaka Organic Chemical Industry Ltd., trade name: Viscoat#295) as a monomer, 1.0 part of sodium dodecylbenzenesulfonate, 4.0 parts of t-butylperoxy-2-ethyl hexanoate (available from NOF Corporation, trade name: PERBUTYL O) as a polymerization initiator, and 200 parts of ion exchanged water were placed in a reactor equipped with a stirrer, and stirred at 35°C for 12 hours. As a result, the monomer and the polymerization initiator were completely absorbed by the seed polymer particles A. The resultant was then polymerized at 90°C for 5 hours. After that, steam was introduced to remove an unreacted monomer and a degradation product of the initiator.

As a result, an aqueous dispersion of non-conductive particles J with an average particle diameter of 672 nm was obtained.

(10-2. Production and Evaluation of Secondary Battery, etc.)

A separator with a porous membrane and a secondary battery were produced by the same operations as those in the processes (1-3) to (1-9) of Example 1 except that the aqueous dispersion of the non-conductive particles J obtained in the process (10-1) was used in place of the aqueous dispersion of the non-conductive particles A obtained in the process (1-2) in the production of slurry for a porous membrane of the process (1-4). The obtained secondary battery and other materials were evaluated in the same manner as in Example 1. The results are shown in Table 2.

<Example 11>

(11-1. Production of Non-Conductive Particles K)

20 parts based on a solid content (i.e., based on the weight of the seed polymer particles A) of the aqueous dispersion of the seed polymer particles A obtained in the process (1-1) of Example 1, 100 parts of neopentyl glycol dimethacrylate (available from Hitachi Chemical Company, Ltd., trade name: FA-125M) as a monomer, 1.0 part of sodium dodecylbenzenesulfonate, 4.0 parts of t-butylperoxy-2-ethyl hexanoate (available from NOF Corporation, trade name: PERBUTYL O) as a polymerization initiator, and 200 parts of ion exchanged water were placed in a reactor equipped with a stirrer, and stirred at 35°C for 12 hours. As a result, the monomer and the polymerization initiator were completely absorbed by the seed polymer particles A. The resultant was then polymerized at 90°C for 5 hours. After that, steam was introduced to remove an unreacted monomer and a degradation product of the initiator.
As a result, an aqueous dispersion of non-conductive particles K with an average particle diameter of 670 nm was obtained.

(11-2. Production and Evaluation of Secondary Battery, etc.)

A separator with a porous membrane and a secondary battery were produced by the same operations as those in the processes (1-3) to (1-9) of Example 1 except that the aqueous dispersion of the non-conductive particles K obtained in the process (11-1) was used in place of the aqueous dispersion of the non-conductive particles A obtained in the process (1-2) in the production of slurry for a porous membrane of the process (1-4). The obtained secondary battery and other materials were evaluated in the same manner as in Example 1. The results are shown in Table 2.

<Example 12>

Non-conductive particles, a separator with a porous membrane, and a secondary battery were produced by the same operations as those in the processes (1-1) to (1-2) and (1-4) to (1-9) of Example 1 except that an aqueous dispersion of SBR (available from ZEON CORPORATION, trade name: BM-400B) was used in place of that obtained in the process (1-3) as a binder for a porous membrane. The obtained secondary battery and other materials were evaluated in the same manner as in Example 1. The results are shown in Table 2.

<Example 13>

Non-conductive particles, a separator with a porous membrane, and a secondary battery were produced by the same operations as those in the processes (1-1) to (1-2) and (1-4) to (1-9) of Example 1 except that polyvinylidene fluoride (PVDF, available from KUREHA CORPORATION, trade name: KF-1100) was used in place of that obtained in the process (1-3) as a binder for a porous membrane. The obtained secondary battery and other materials were evaluated in the same manner as in Example 1. The results are shown in Table 2.

<Example 14>

(14-1. Production of Positive Electrode with Porous Membrane)

The slurry for a porous membrane obtained in the process (1-4) of Example 1 was applied onto a surface on a positive electrode material layer side of the positive electrode obtained in the process (1-6) of Example 1 so that the positive electrode material layer was completely coated and the thickness of dried porous membrane was 5 μm, to obtain a slurry layer. The slurry layer was dried at 50°C for 10 minutes to form a porous membrane. Thus, a positive electrode with a porous membrane was obtained. The resulting positive electrode with a porous membrane had a layer structure of (porous membrane) / (positive electrode material layer) / (aluminum foil).

(14-2. Production and Evaluation of Secondary Battery, etc.)

A secondary battery was produced by the same operation as that in the process (1-8) of Example 1 except that the following points were changed.

- An organic separator layer (single layer polyethylene separator produced by the wet method, thickness: 16 $\mu$m, which was the same as that used as the organic separator layer in the process (1-5) of Example 1) was used as it was in place of the separator with a porous membrane in the production of battery of the process (1-8).
- The positive electrode with a porous membrane obtained in the process (14-1) was used in place of the positive electrode in the production of battery of the process (1-8). The disc-shaped positive electrode with a porous membrane was placed in an outer container so that a surface on the porous membrane side was oriented toward the side of the disc-shaped separator and a surface on the aluminum foil side was oriented upward.

The obtained secondary battery and other materials were evaluated in the same manner as in Example 1. However, the reliability test of the separator was not performed. Instead, the reliability test of the electrode with a porous membrane was performed. The results are shown in Table 2.

<Example 15>

(15-1. Production of NMP Dispersion of Non-Conductive Particles A)

80 parts of N-methyl-2-pyrrolidone (NMP) was added to and sufficiently mixed in 100 parts (solid content concentration: 20%) of the aqueous dispersion of the non-conductive particles A obtained in the process (1-2) of Example 1. Moisture was completely removed in a system of reduced pressure environment at 90°C to obtain an NMP dispersion (solid content concentration: 20%) of the non-conductive particles A.

(15-2. Production of NMP dispersion of Binder for Porous Membrane)

360 parts of NMP was added to and sufficiently mixed in 100 parts (solid content: 40%) of the aqueous dispersion of the binder for a porous membrane obtained in the process (1-3) of Example 1. Moisture was completely removed in a system of reduced pressure environment at 90°C to obtain an NMP dispersion (solid content: 10%) of binder for a porous membrane.

(15-3. Production of Slurry for Porous Membrane)

The NMP dispersion of the non-conductive particles A obtained in the process (15-1) and the NMP dispersion of the binder for a porous membrane obtained in the process (15-2) were mixed at a solid content ratio of 87:13, to obtain a slurry for a porous membrane having a solid content concentration of 18%.

(15-4. Production of Negative Electrode with Porous Membrane)

The slurry for a porous membrane obtained in the process (15-3) of Example 15 was applied onto a surface on the negative electrode material layer side of the negative electrode obtained in the process (1-7) of Example 1 so that the negative electrode material layer was completely coated and the thickness of dried porous membrane was 5 $\mu$m, to obtain a slurry layer. The slurry layer was dried at 80°C for 10 minutes to form a porous membrane layer. Thus, a negative electrode with a porous membrane was obtained. The resulting negative electrode with a porous membrane had a layer structure of (porous membrane) / (negative electrode material layer) / (copper foil).

(15-5. Production and Evaluation of Secondary Battery, etc.)

A secondary battery was produced by the same operation as that in the process (1-8) of Example 1 except that the following points were changed.

- An organic separator layer (single layer polyethylene separator produced by the wet method, thickness: 16 $\mu$m), which was the same as used as the organic separator layer in the process (1-5) of Example 1) was used as it was in place of the separator with a porous membrane in the production of battery of the process (1-8).
- The negative electrode with a porous membrane obtained in the process (15-4) was used in place of the negative electrode in the production of battery of the process (1-8). The disc-shaped negative electrode with a porous membrane was placed in an outer container so that a surface on the porous membrane side was oriented toward the side of the disc-shaped separator and a surface on the aluminum foil side was oriented upward.

The obtained secondary battery and other materials were evaluated in the same manner as in Example 1. However, the reliability test of the separator was not performed. Instead, the reliability test of the electrode with a porous membrane was performed. The results are shown in Table 3.

<Comparative Example 1>

(C1-1. Production of Seed Polymer Particles C)

0.06 parts of sodium dodecylsulfate, 0.23 parts of ammonium persulfate, and 100 parts of ion exchanged water were placed in a reactor equipped with a stirrer, and mixed to prepare a mixture C. The temperature was raised to 80°C. Meanwhile, in another reactor, 93.8 parts of butyl acrylate, 2.0 parts of methacrylic acid, 2.0 parts of acrylonitrile, 1.0 part of allyl glycidyl ether, 1.2 parts of N-methylol acrylamide, 0.1 parts of sodium dodecylsulfate, 10 parts of t-dodecyl mercaptan, and 100 parts of ion exchanged water were mixed to prepare a dispersion of a monomer mixture 3. This dispersion of the monomer mixture 3 was continuously added to the mixture C obtained above over 4 hours, for polymerization. The temperature in a reaction system of continuous addition of the dispersion of the monomer mixture 3 was maintained to 80°C, to perform the reaction. After completion of the continuous addition, the reaction was continued at 90°C for 3 hours. As a result, an aqueous dispersion of seed polymer particles C with an average particle diameter of 370 nm was obtained.

(C1-2. Production of Non-Conductive Particles L)

Non-conductive particles L were obtained in the same manner as in the process (1-2) of Example 1 except that the seed polymer particles C obtained in the process (C1-1) were used in place of the seed polymer particles A.

(C1-3. Production and Evaluation of Secondary Battery, etc.)

A separator with a porous membrane and a secondary battery were produced by the same operations as those in the processes (1-3) to (1-9) of Example 1 except that an aqueous dispersion of the non-conductive particles L obtained in the process (C1-2) was used in place of the aqueous dispersion of the non-conductive particles A obtained in the process (1-2) in the production of slurry for a porous membrane of the process (1-4). The obtained secondary battery and other materials were evaluated in the same manner as in Example 1. The results are shown in Table 3.

<Comparative Example 2>

(C2-1. Production of Non-Conductive Particles M)

500 parts of ion exchanged water, 0.4 parts of sodium dodecyl benzenesulfonate, 1.0 part of acrylic acid, 85 parts of ethylene glycol dimethacrylate (available from KYOEISHA CHEMICAL CO., LTD., trade name: LIGHT ESTER EG), 15 parts of styrene, 5 parts of t-butylperoxy-2-ethylhexanoate (available from NOF Corporation, trade name: PERBUTYL O), and 200 parts of cyclohexanol were placed in a container equipped with a stirrer, and stirred until crude drop was visually unrecognizable.
The mixture was stirred by an in-line type emulsifying dispersion machine (manufactured by Pacific Machinery & Engineering Co., Ltd., trade name: CAVITRON) under high speed shearing at a rotation speed of 15,000 rpm for 1 minute to obtain a dispersion liquid of the polymerizable monomer composition.
The resultant dispersion liquid was placed in a reactor equipped with a stirrer, and polymerized at 90°C for 12 hours. After that, steam was introduced to remove a non-reactive solvent, an unreacted monomer, and a degradation product of the polymerization initiator.
As a result, an aqueous dispersion of non-conductive particles with an average particle diameter of 2,700 nm was obtained. The aqueous dispersion was treated by a media type dispersion machine (manufactured by Willy A. Bachofen AG, trade name: DYNO MILL) to crush the non-conductive particles. As a result, an aqueous dispersion of non-conductive particles M with an average particle diameter of 820 nm was obtained.

(C2-2. Production and Evaluation of Secondary Battery, etc.)

A separator with a porous membrane and a secondary battery were produced by the same operations as those in the processes (1-3) to (1-9) of Example 1 except that the aqueous dispersion of the non-conductive particles M obtained in the process (C2-1) was used in place of the aqueous dispersion of the non-conductive particles A obtained in the process (1-2) in the production of slurry for a porous membrane of the process (1-4). The obtained secondary battery and other materials were evaluated in the same manner as in Example 1. The results are shown in Table 3.

<Comparative Example 3>

(C3-1. Production of Non-Conductive Particles N)

20 parts based on a solid content (i.e., based on the weight of the seed polymer particles A) of aqueous dispersion of the seed polymer particles A obtained in the process (1-1) of Example 1, 50 parts of ethylene glycol dimethacrylate (available from KYOEISHA CHEMICAL CO., LTD., trade name: LIGHT ESTER EG) as a monomer, 50 parts of styrene as a monomer, 1.0 part of sodium dodecylbenzenesulfonate, 4.0 parts of t-butylperoxy-2-ethyl hexanoate (available from NOF Corporation, trade name: PERBUTYL O) as a polymerization initiator, and 200 parts of ion exchanged water were placed in a reactor equipped with a stirrer, and stirred at 35°C for 12 hours. As a result, the monomers and the polymerization initiator were completely absorbed by the seed polymer particles A. The resultant was then polymerized at 90°C for 5 hours. After that, steam was introduced to remove an unreacted monomer and a degradation product of the initiator.
As a result, an aqueous dispersion of non-conductive particles N with an average particle diameter of 666 nm was obtained.

(C3-2. Production and Evaluation of Secondary Battery, etc.)

A separator with a porous membrane and a secondary battery were produced by the same operations as those in the processes (1-3) to (1-9) of Example 1 except that the aqueous dispersion of the non-conductive particles N obtained in the process (C3-1) was used in place of the aqueous dispersion of the non-conductive particles A obtained in the process (1-2) in the production of slurry for a porous membrane of the process (1-4). The obtained secondary battery and other materials were evaluated in the same manner as in Example 1. The results are shown in Table 3.

<Comparative Example 4>

(C4-1. Production of Non-Conductive Particles O)

An aqueous dispersion of non-conductive particles O with an average particle diameter of 671 nm was obtained by the same operation as that in the process (1-2) of Example 1 except that divinyl benzene (available from Nippon Steel Chemical Co., Ltd., trade name: DVB-960) was used in place of ethylene glycol dimethacrylate (available from KYOEISHA CHEMICAL CO., LTD., trade name: LIGHT ESTER EG).

(C4-2. Production and Evaluation of Secondary Battery, etc.)

A separator with a porous membrane and a secondary battery were produced by the same operations as those in the processes (1-3) to (1-9) of Example 1 except that the aqueous dispersion of the non-conductive particles O obtained in the process (C4-1) was used in place of the aqueous dispersion of the non-conductive particles A obtained in the process (1-2) in the production of slurry for a porous membrane of the process (1-4). The obtained secondary battery and other materials were evaluated in the same manner as in Example 1. The results are shown in Table 3.

<Comparative Example 5>

(C5-1. Production of Slurry for Porous Membrane)

Alumina with an average particle diameter of 600 nm, the binder particles for a porous membrane, and carboxymethyl cellulose (available from Daicel Corporation, trade name: DAICEL 1220) were mixed in water at a weight ratio of solid content of 94.8:3.8:1.4, and the mixture was subjected to dispersion treatment by a planetary mixer to prepare a slurry for a porous membrane.

(C5-2. Production and Evaluation of Secondary Battery, etc.)

A separator with a porous membrane and a secondary battery were produced by the same operations as in those the processes (1-5) to (1-9) of Example 1 except that the slurry for a porous membrane obtained in the process (C5-1) was used in place of the slurry for a porous membrane obtained in the process (1-4) in the production of separator with a porous membrane of the process (1-5). The obtained secondary battery and other materials were evaluated in the same manner as in Example 1. The results are shown in Table 3.

Table 1

Table 1

| | Ex. 1 | Ex.2 | Ex.3 | Ex.4 | Ex.5 | Ex 6 | Ex.7 |
|---|---|---|---|---|---|---|---|
| (SB)/(SD) | 2.5 | 1.4 | 2.6 | 2.6 | 2.6 | 3.8 | 4.7 |
| SB(m2/g) | 22.9 | 13.0 | 23.0 | 22.8 | 22.9 | 34.0 | 41.0 |
| SD(m2/g) | 9.0 | 9.0 | 8.9 | 8.9 | 8.9 | 8.9 | 8.8 |
| Shape factor | 1.10 | 1.08 | 1.14 | 1.10 | 1.11 | 1.12 | 1.13 |
| Polyfunctional (meth)acrylic monomer ratio | 83 | 83 | 83 | 71 | 96 | 83 | 83 |
| Type | Ethylene glycol dimethacrylate | Ethylene glycol dimethacrylate | Ethylene glycol dimethacrylate | Ethylene glycol dimethacrylate | Ethylene glycol dimethacrylate | Ethylene glycol dimethacrylate | Ethylene glycol dimethacrylate |
| Binder type | Acryl polymer | Acryl polymer | Acryl polymer | Acryl polymer | Acryl polymer | Acryl polymer | Acryl polymer |
| Binder containing ratio | 12 | 12 | 12 | 12 | 12 | 12 | 12 |
| Number average particle diameter | 670 | 665 | 675 | 673 | 670 | 677 | 680 |
| Subject to form a porous membrane | Separator | Separator | Separator | Separator | Separator | Separator | Separator |
| Metal ion amount | Good | Good | Good | Good | Good | Good | Good |
| Moisture amount | Good | Good | Good | Good | Good | Good | Good |
| Powder falling | A | A | A | A | A | A | A |
| Local heating test | A | B | B | B | A | C | C |
| High-temperature short circuit test | Good | Good | Good | Good | Good | Good | Good |
| Battery cycle property | A | B | A | A | A | B | C |

EP 2 728 646 B1

Table 2

Table 2

| | Ex.8 | Ex.9 | Ex.10 | Ex.11 | Ex.12 | Ex.13 | Ex.14 |
|---|---|---|---|---|---|---|---|
| (SB)/(SD) | 2.5 | 2.6 | 2.6 | 2.5 | 2.6 | 2.6 | 2.6 |
| SB(m2/g) | 22.9 | 23.0 | 22.9 | 22.0 | 22.9 | 22.9 | 22.9 |
| SD(m2/g) | 9.2 | 9.0 | 8.9 | 8.9 | 8.9 | 8.9 | 8.9 |
| Shape factor | 1.19 | 1.08 | 1.11 | 1.12 | 1.10 | 1.10 | 1.10 |
| Polyfunction al (meth)acrylic monomer ratio | 83 | 50 | 83 | 83 | 83 | 83 | 83 |
| Type | Ethylene glycol dimethacrylate | Ethylene glycol dimethacrylate | Trimethy lol propane triacrylate | Neopentyl glycol dimethacryalte | Ethylene glycol dimethacrylate | Ethylene glycol dimethacrylate | Ethylene glycol dimethacrylate |
| Binder type | Acryl polymer | Acryl polymer | Acryl polymer | Acryl polymer | SBR | PVDF | Acryl polymer |
| Binder containing ratio | 12 | 12 | 12 | 12 | 12 | 12 | 12 |
| Number average particle diameter | 655 | 666 | 672 | 670 | 670 | 670 | 670 |
| Subject to form a porous membrane | Separator | Separator | Separator | Separator | Separator | Separator | Positive electrode |
| Metal ion amount | Good | Good | Good | Good | Good | Good | Good |
| Moisture amount | Good | Good | Good | Good | Good | Good | Good |
| Powder falling | A | A | B | B | A | A | A |
| Local heating test | C | C | A | A | C | C | - |
| High-temperature short circuit test | Good | Good | Good | Good | Good | Good | Good |
| Battery cycle property | B | A | A | A | C | C | A |

37

Table 3

Table 3

| | Ex.15 | Comp. Ex. 1 | Comp. Ex. 2 | Comp. Ex. 3 | Comp. Ex. 4 | Comp. Ex. 5 |
|---|---|---|---|---|---|---|
| (SB)/(SD) | 2.6 | 1.0 | 6.3 | 2.2 | 1.9 | 0.4 |
| SB(m2/g) | 22.9 | 9.0 | 40.0 | 20.0 | 17.0 | 4.3 |
| SD(m2/g) | 8.9 | 8.9 | 6.3 | 8.9 | 8.9 | 10.9 |
| Shape factor | 1.10 | 1.04 | 1.75 | 1.07 | 1.11 | 2.07 |
| Polyfunctional (meth)acrylic monomer ratio | 83 | 83 | 84 | 41 | 83 | - |
| Type | Ethylene glycol dimethacrylate | Ethylene glycol dimethacrylate | Ethylene glycol dimethacrylate | Ethylene glycol dimethacrylate | Divinyl benzene | - |
| Binder type | Solvent type Acryl polymer | Acryl polymer | Acryl polymer | Acryl polymer | Acryl polymer | Acryl polymer |
| Binder containing ratio | 12 | 12 | 12 | 12 | 12 | 3.8 |
| Number average particle diameter | 670 | 674 | 820 | 666 | 671 | 550 |
| Subject to form a porous membrane | Negative electrode | Separator | Separator | Separator | Separator | Separator |
| Metal ion amount | Good | Good | Good | Good | Good | Poor |
| Moisture amount | Good | Good | Good | Good | Good | Poor |
| Powder falling | A | A | A | A | C | D |
| Local heating test | - | E | D | E | C | A |
| High-temperature short circuit test | Good | Poor | Poor | Poor | Good | Good |
| Battery cycle property | A | D | D | B | B | D |

The meanings of abbreviations shown in Tables are as follows.
Shape factor: shape factor of non-conductive particles.
Polyfunctional (meth)acrylic monomer ratio: ratio of a (meth)acrylic monomer in the all monomers of the material for non-conductive particles. The unit is % by weight.
Binder type: type of a binder for a porous membrane.
Acryl: acrylic polymer, SBR: SBR aqueous dispersion (available from ZEON CORPORATION, trade name: BM-400B), PVDF: polyvinylidene fluoride.
Binder containing ratio: containing ratio of a binder in a porous membrane. The unit is % by weight.
Number average particle diameter: number average particle diameter of non-conductive particles. The unit is nm.
Subject to form a porous membrane: subject to which a porous membrane is formed. Separator, positive electrode, or negative electrode.
Metal ion amount: amount of metal ions contained in non-conductive particles. Results evaluated as described above.
Moisture amount: moisture amount of an electrode with a porous membrane or a separator with a porous membrane. Results evaluated as described above.
Powder falling: evaluation results of powder falling property of an electrode with a porous membrane or a separator with a porous membrane.
Local heating test: evaluation results of heat resistance of a separator with a porous membrane.
High-temperature short circuit test: evaluation results of reliability test of an electrode with a porous membrane or a separator with a porous membrane.
Battery cycle property: evaluation results of cycle property test of a battery.
As seen from the results in Tables 1 to 3, regarding the metal ion amount and the moisture amount of Examples 1 to 15 satisfying the requirements of the present invention, favorable results are obtained. In addition, balanced good results are obtained regarding the powder falling, local heating test, high-temperature short circuit test, and battery cycle property.
In contrast, when the polymer particles having a (SB)/(SD) outside a specific range (Comparative Examples 1 and 2) and the polymer particles in which the type or ratio of polyfunctional (meth)acrylic monomer unit is outside a specific range (Comparative Examples 3 and 4) were used as the non-conductive particles, favorable results are obtained regarding the metal ion amount and the moisture amount. In at least one of the powder falling, local heating test, high-temperature short circuit test, and battery cycle property, however, poor results are obtained. When alumina particles were used as the non-conductive particles (Comparative Example 5), although a favorable result is obtained regarding the high-temperature short circuit test, poor results are obtained regarding the metal ion amount, moisture amount, porous membrane uniformity, powder falling, and battery cycle property.

**Claims**

1. A porous membrane for a secondary battery comprising non-conductive particles and a binder for a porous membrane, wherein
   the non-conductive particles are spherical polymer particles having a rough surface, and the particles include 50% by weight or more of a polyfunctional (meth)acrylic monomer unit,
   **characterized in that** the particles satisfy the following expression (1):

$$1.2 \leq (SB) / (SD) \leq 5.0 \ (1)$$

   wherein SB represents an actual specific surface area of the particles and SD means a theoretical specific surface area of the particles,
   an arithmetic average of shape factor of the particles is 1.20 or less, wherein the arithmetic average of shape factor is determined by observing the shape of particles, calculating each shape factor of the particles by the following expression (A), and calculating the arithmetic average thereof:

$$\text{shape factor} = (\text{maximum diameter}/2)^2 \times \pi)/\text{projected area} \qquad \text{expression (A)},$$

   wherein the maximum diameter means the particle width which is the maximum distance between two parallel lines sandwiching an image of the non-conductive particle projected onto a plane and the projected area means the area of the projection image of the non-conductive particle projected onto a plane surface.

2. The porous membrane for a secondary battery according to claim 1, wherein:

the binder for a porous membrane is a (meth)acrylic polymer; and
a containing ratio of the binder for a porous membrane in the porous membrane for a secondary battery is 3 to 20% by weight.

3. The porous membrane for a secondary battery according to claim 1 or 2, wherein the non-conductive particles have a number average particle diameter of 100 to 1,500 nm.

4. A method for producing the porous membrane for a secondary battery according to claim 1, the method comprising:

polymerizing a polymerizable monomer composition to obtain non-conductive particles;
mixing the non-conductive particles, a binder for a porous membrane, and a medium to obtain a slurry for a porous membrane containing them;
applying the slurry for a porous membrane onto a substrate to obtain a slurry layer; and
drying the slurry layer, wherein
the non-conductive particles are spherical polymer particles having a rough surface,
the particles satisfy the following expression (1):

$$1.2 \leq (SB) / (SD) \leq 5.0 \ (1)$$

wherein SB represents an actual specific surface area of the particles and SD means a theoretical specific surface area of the particles,
an arithmetic average of shape factor of the particles is 1.20 or less, and
the particles include 50% by weight or more of a polyfunctional (meth)acrylic monomer unit.

5. The production method according to claim 4, wherein:

the binder for a porous membrane is a (meth)acrylic polymer;
the medium is an aqueous medium; and
the step of obtaining the slurry for a porous membrane includes obtaining the slurry for a porous membrane as an aqueous dispersion.

6. An electrode for a secondary battery, comprising:

a current collector;
an electrode material layer that includes an electrode active material and a binding agent for an electrode material layer, and adheres to the current collector; and
the porous membrane according to any one of claims 1 to 3, the porous membrane being layered on a surface of the electrode material layer.

7. A separator for a secondary battery, comprising: an organic separator layer; and the porous membrane according to any one of claims 1 to 3, the porous membrane being layered on the organic separator layer.

8. A secondary battery comprising: a positive electrode; a negative electrode; a separator; and an electrolyte solution, wherein at least one of the positive electrode, the negative electrode, and the separator has the porous membrane according to any one of claim to 3.

**Patentansprüche**

1. Eine poröse Membran für eine Sekundärbatterie, umfassend nicht-leitende Teilchen und ein Bindemittel für eine poröse Membran, wobei
die nicht-leitenden Teilchen kugelförmige Polymerteilchen mit einer rauen Oberfläche sind und

die Teilchen 50 Gew.-% oder mehr einer polyfunktionellen (Meth)acrylsäuremonomer-Einheit beinhalten, **dadurch gekennzeichnet, dass** die Teilchen den folgenden Ausdruck (1) erfüllen:

$$1{,}2 \leq (SB) / (SD) \leq 5{,}0 \quad (1)$$

wobei SB eine tatsächliche spezifische Oberfläche der Teilchen bedeutet und SD eine theoretische spezifische Oberfläche der Teilchen bedeutet,
ein arithmetisches Mittel des Formfaktors der Teilchen 1,20 oder weniger beträgt, wobei das arithmetische Mittel des Formfaktors bestimmt wird durch Betrachten der Form der Teilchen, Berechnen jedes Formfaktors der Teilchen durch den folgenden Ausdruck (A) und Berechnen des arithmetischen Mittels daraus:

$$\text{Formfaktor} = (\text{Maximaldurchmesser}/2)^2 \times \pi)/\text{projizierte Fläche} \qquad \text{Ausdruck (A)},$$

wobei der Maximaldurchmesser die Teilchenbreite bedeutet, die der Maximalabstand zwischen zwei parallelen Linien ist, die ein Bild des nicht-leitenden Teilchens, das auf eine Ebene projiziert ist, zwischen sich einschließen, und die projizierte Fläche die Fläche des Projektionsbildes des nicht-leitenden Teilchens, das auf eine Ebenenoberfläche projiziert ist, bedeutet.

2. Die poröse Membran für eine Sekundärbatterie nach Anspruch 1, wobei:

   das Bindemittel für eine poröse Membran ein (Meth)acrylsäurepolymer ist; und
   ein enthaltener Anteil an Bindemittel für eine poröse Membran in der porösen Membran für eine Sekundärbatterie 3 bis 20 Gew.-% beträgt.

3. Die poröse Membran für eine Sekundärbatterie nach Anspruch 1 oder 2, wobei die nicht-leitenden Teilchen ein Zahlenmittel des Teilchendurchmessers von 100 bis 1500 nm aufweisen.

4. Ein Verfahren zur Herstellung der porösen Membran für eine Sekundärbatterie nach Anspruch 1, wobei das Verfahren umfasst:

   Polymerisieren einer polymerisierbaren Monomerzusammensetzung, um nicht-leitende Teilchen zu erhalten;
   Mischen der nicht-leitenden Teilchen, eines Bindemittels für eine poröse Membran und eines Mediums, um eine Aufschlämmung für eine poröse Membran, die diese enthält, zu erhalten;
   Aufbringen der Aufschlämmung für eine poröse Membran auf ein Substrat, um eine Aufschlämmungsschicht zu erhalten; und
   Trocknen der Aufschlämmungsschicht, wobei
   die nicht-leitenden Teilchen kugelförmige Polymerteilchen mit einer rauen Oberfläche sind,
   die Teilchen den folgenden Ausdruck (1) erfüllen:

$$1{,}2 \leq (SB) / (SD) \leq 5{,}0 \quad (1)$$

   wobei SB eine tatsächliche spezifische Oberfläche der Teilchen bedeutet und SD eine theoretische spezifische Oberfläche der Teilchen bedeutet,
   ein arithmetisches Mittel des Formfaktors der Teilchen 1,20 oder weniger beträgt und die Teilchen 50 Gew.-% oder mehr einer polyfunktionellen (Meth)acrylsäuremonomereinheit beinhalten.

5. Das Herstellungsverfahren nach Anspruch 4, wobei:

   das Bindemittel für eine poröse Membran ein (Meth)acrylsäurepolymer ist;
   das Medium ein wässriges Medium ist; und
   der Schritt des Erhaltens der Aufschlämmung für eine poröse Membran den Erhalt der Aufschlämmung für eine poröse Membran als eine wässrige Dispersion beinhaltet.

6. Eine Elektrode für eine Sekundärbatterie, umfassend:

einen Stromabnehmer;

eine Elektrodenmaterialschicht, die ein elektrodenaktives Material und ein Bindemittel für eine Elektrodenmaterialschicht beinhaltet und an dem Stromabnehmer anhaftet; und

die poröse Membran nach einem der Ansprüche 1 bis 3, wobei die poröse Membran eine Schicht auf einer Oberfläche der Elektrodenmaterialschicht bildet.

7. Ein Separator für eine Sekundärbatterie, umfassend: eine organische Separatorschicht; und die poröse Membran nach einem der Ansprüche 1 bis 3, wobei die poröse Membran eine Schicht auf der organischen Separatorschicht bildet.

8. Eine Sekundärbatterie, umfassend: eine positive Elektrode; eine negative Elektrode; einen Separator; und eine Elektrolytlösung, wobei mindestens eine(r) aus der positiven Elektrode, der negativen Elektrode und dem Separator die poröse Membran nach einem der Ansprüche 1 bis 3 aufweist.

**Revendications**

1. Membrane poreuse destinée à une batterie secondaire qui comprend des particules non conductrices et un liant pour membrane poreuse, dans laquelle

les particules non conductrices sont des particules de polymère sphériques qui possèdent une surface rugueuse, et les particules comprennent 50% en poids ou plus d'une unité de monomère polyfonctionnel (méth)acrylique, **caractérisée en ce que** les particules satisfont l'expression (1) ci-dessous :

$$1,2 \leq (SB) / (SD) \leq 5,0 \ (1)$$

où SB représente une surface spécifique réelle des particules, et SD correspond à une surface spécifique théorique des particules,

une moyenne arithmétique du facteur de forme des particules est de 1,20 ou moins, la moyenne arithmétique du facteur de forme étant déterminée en observant la forme des particules, en calculant chaque facteur de forme des particules à l'aide de l'expression (A) ci-dessous, et en calculant la moyenne arithmétique de celui-ci :

$$\text{facteur de forme} = (\text{diamètre maximal}/2)^2 \times \pi)/\text{surface projetée}$$
$$\text{expression (A),}$$

où le diamètre maximal correspond à la largeur des particules qui est égale à la distance maximale entre deux lignes parallèles qui prennent en sandwich une image de la particule non conductrice projetée sur un plan, et la surface projetée correspond à la surface de l'image de projection de la particule non conductrice projetée sur une surface plane.

2. Membrane poreuse destinée à une batterie secondaire selon la revendication 1, dans laquelle :

le liant pour membrane poreuse est un polymère (méth)acrylique ; et un rapport de présence du liant pour membrane poreuse dans la membrane poreuse destinée à une batterie secondaire est de 3 à 20% en poids.

3. Membrane poreuse destinée à une batterie secondaire selon la revendication 1 ou 2, dans laquelle les particules non conductrices présentent un diamètre moyen de particules en nombre de 100 à 1500 nm.

4. Procédé de fabrication de la membrane poreuse destinée à une batterie secondaire selon la revendication 1, le procédé comprenant :

la polymérisation d'une composition monomère polymérisable afin d'obtenir des particules non conductrices ; le mélange des particules non conductrices, d'un liant pour membrane poreuse, et d'un milieu afin d'obtenir une boue pour une membrane poreuse qui les contient ;

l'application de la boue destinée à une membrane poreuse sur un substrat, afin d'obtenir une couche de boue ; et
le séchage de la couche de boue, dans lequel
les particules non conductrices sont des particules de polymère sphériques qui possèdent une surface rugueuse,
les particules satisfont l'expression (1) ci-dessous :

$$1,2 \leq (SB) / (SD) \leq 5,0 \ (1)$$

où SB représente une surface spécifique réelle des particules, et SD correspond à une surface spécifique théorique des particules,
une moyenne arithmétique de facteur de forme des particules est de 1,20 ou moins, et
les particules comprennent 50% en poids ou plus d'une unité de monomère polyfonctionnel (méth)acrylique.

5. Procédé de fabrication selon la revendication 4, dans lequel :

le liant pour membrane poreuse est un polymère (méth)acrylique ;
le milieu est un milieu aqueux ; et
l'étape d'obtention de la boue destinée à une membrane poreuse comprend l'obtention de la boue destinée à une membrane poreuse sous forme de dispersion aqueuse.

6. Électrode destinée à une batterie secondaire, qui comprend :

un collecteur de courant ;
une couche de matériau d'électrode qui comprend un matériau actif d'électrode et un agent de liaison destiné à une couche de matériau d'électrode, et adhère au collecteur de courant ; et
la membrane poreuse selon l'une quelconque des revendications 1 à 3, la membrane poreuse étant placée sur une surface de la couche de matériau d'électrode.

7. Séparateur destiné à une batterie secondaire, qui comprend :

une couche de séparation organique ; et la membrane poreuse selon l'une quelconque des revendications 1 à 3, la membrane poreuse étant placée sur la couche de séparation organique.

8. Batterie secondaire qui comprend : une électrode positive ; une électrode négative ; un séparateur ; et une solution d'électrolyte, dans laquelle au moins l'un de l'électrode positive, de l'électrode négative, et du séparateur possède la membrane poreuse selon l'une quelconque des revendications 1 à 3.

**EP 2 728 646 B1**

**Patent documents cited in the description**

- JP 2007294437 A
- JP 2005327680 A
- JP 2006139978 A
- JP 2009064566 A